# EUROPEAN PATENT APPLICATION

(11) **EP 3 253 050 A1**
(43) Date of publication of application: **06.12.2017**
(21) Application number: 15886135.1
(22) Date of filing: 22.12.2015
(51) Int. Cl.: H04N 7/14

(54) **DATA PROCESSING METHOD IN WEBPAGE-BASED REAL-TIME COMMUNICATION MEDIA AND DEVICE UTILIZING SAME**

(30) Priority: 26.03.2015 CN 201510136447
(71) Applicant: ZTE Corporation, Shenzhen City, Guangdong 518057 (CN)
(72) Inventor: LI, Congbing, Shenzhen Guangdong 518057 (CN)
(74) Representative: HGF Limited
(86) International application number: PCT/CN2015/098285
(87) International publication number: WO 2016/150213

(57) **Abstract**

Provided are a media processing method and device for web real-time communication, which reduce a client terminal processing load and decrease network bandwidth consumption under a multi-user real-time multimedia communication scenario. The method includes: after a first WebRTC terminal and a second WebRTC terminal establish a point-to-point real-time multimedia communication, an application server receiving a message indicating that the first WebRTC terminal decides to add one or more third-party WebRTC terminals to the communication, and respectively assisting in establishing media connections between the first WebRTC terminal, the second WebRTC terminal and the third-party WebRTC terminal and a media processing unit; and the application server controlling the media processing unit to establish a multi-party conference among the first WebRTC terminal, the second WebRTC terminal and the third-party WebRTC terminal, to make each WebRTC terminal in the multi-party conference only send one media stream and receive one synthesized media stream.

## Description

### Technical Field

This document relates to but is not limited a network real-time communication technology, in particular to a media processing method and device for web real-time communication.

### Background

Web Real-Time Communication (WebRTC) is a technology supporting a web browser to perform real-time audio and video communication, which is obtained by Google by acquiring Global IP Solution Company. In order to promote plugin-free real-time multimedia communication of Web browsers, Google opened the WebRTC technology to the public in 2011 and established a W3C WebRTC standard organization and an IETF RTC-WEB standard group in alliance with related manufacturers in the industry. Herein the W3C WebRTC standard organization is responsible for formulating JavaScript API oriented to Web developers, and the IETF RTC-WEB standard group is responsible for formulating technical standards of audio and video coding and decoding, network transmission and NAT (Network Address Translation) traversal of WebRTC protocol stacks in browsers.

With continuous proceeding of WebRTC standards, mainstream browsers such as Chrome, Firefox and Opera all natively embed a WebRTC function into browser frames. By utilizing JavaScript API provided by these browsers, Web developers can utilize self-selected signaling protocols to complete an "offer/answer" media negotiation process, so as to realize audio and video communication between two parties or multiple parties or other web instant messaging services.

A benefit brought by WebRTC to Web developments lies in that, since audio and video coding and decoding modules, network transmission modules and the like which must be realized by browser plug-ins in the past are all integrated into browsers, the development workload and difficulty of web instant messaging are greatly reduced, such that Web developers have more vigor to be put into service logic of real-time multimedia interaction. Just because of this beneficial factor, WebRTC prototype systems spring up in recent years, and telecommunication operators and Internet manufacturers actively carry out studies and exploration on the WebRTC technology.

Although various advantages of WebRTC are widely concerned on the Internet, it should be also noted that any technology has both sides. With respect to WebRTC, it is a hidden defect that a media interaction solution thereof uses a point-to-point direct transmission mode.

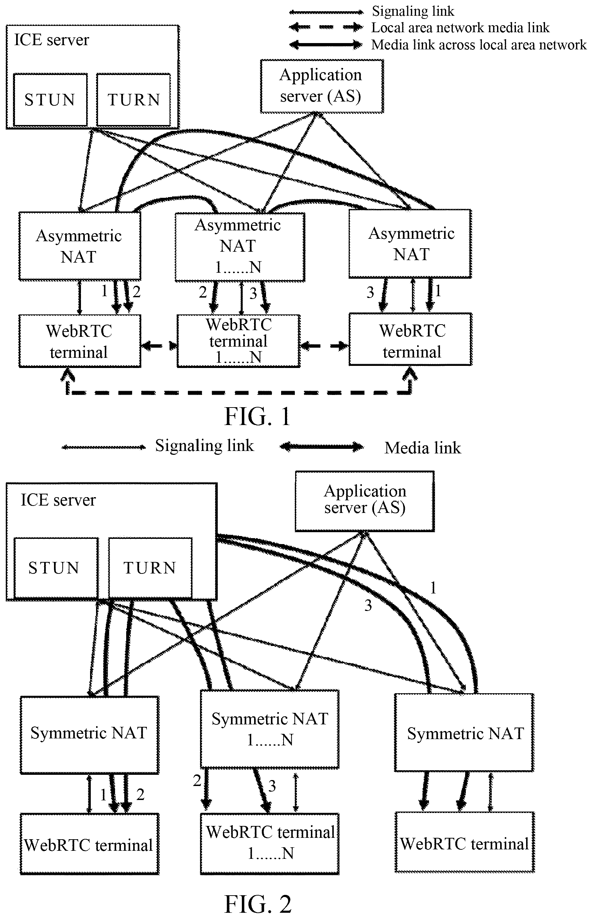

Under a simple WebRTC real-time communication scenario illustrated in FIG. 1, multiple WebRTC terminals are located in the same local area network environment or multiple WebRTC terminals are respectively located in different local area networks after asymmetric NAT. WebRTC terminals and asymmetric NATs in the middle all are marked with "1...N" which represent 1 to N WebRTC terminal and asymmetric NAT network element pairs. From FIG. 1, it can be seen that each WebRTC terminal receives real-time media streams sent by other N-1 parties while sending N-1 (N is the total number of communication participants) real-time media streams. As a result, each WebRTC terminal actually simultaneously processes ((N-1)+(N-1)+1) media streams (the last "1" in the formula represents a media stream of the WebRTC terminal itself), i.e., totally 2N-1 media streams. In FIG. 1, thin solid lines represent signaling links, thick solid lines represent media links across local area networks, thick dashed lines represent local area network media links, different media links in FIG. 1 are distinguished by using different numbers 1, 2 and 3, and the same number represents two endpoints of the same media link.

Under a relay WebRTC real-time communication scenario illustrated in FIG. 2, it is substantively consistent with the mode in FIG. 1, and similarly each WebRTC terminal needs to process 2N-1 media streams. A major difference therebetween lies in that the WebRTC terminals which communication with one another are not located in the same local area network environment but are located in different local area networks after different symmetric NATs. As a result, all media streams need to bypass through an ICE server to other each party. In FIG. 1, thin solid lines represent signaling links and thick solid lines represent media links.

Practices show that, under a scenario of two-party conversation or conference among a small number of multiple parties under a local area network environment, the WebRTC point-to-point media stream direct transmission mode may reluctantly cope with the processing. However, with the increase of the number of communication parties and under complex Internet environments, this will inevitably cause bad influences such as that the client terminal processing load is too heavy, the user network bandwidth consumption is too great and the quality of service is sharply decreased, and consequently the instant messaging experience of users and the development of services are finally influenced.

### Summary

What described below is a summary of the subject described in detail in this document. This summary is not used for limiting the protection scope of the claims.

The embodiments of the present invention provide a media processing method and device for WebRTC, so as to solve the problem of how to reduce the client terminal processing load and decrease the network bandwidth consumption under a scenario of multi-user real-time multimedia communication.

The embodiment of the present invention provides a media processing method for Web Real-Time Communication (WebRTC). Processing executed by an application server includes:
after a first WebRTC terminal and a second WebRTC terminal establish a point-to-point real-time multimedia communication, an application server receiving a message indicating that the first WebRTC terminal decides to add one or more third-party WebRTC terminals to the communication, respectively assisting in establishing media connections between the first WebRTC terminal, the second WebRTC terminal and the third-party WebRTC terminal and a media processing unit, and shutting down a point-to-point media connection between the first WebRTC terminal and the second WebRTC terminal; and
the application server controlling the media processing unit to establish a multi-party conference among the first WebRTC terminal, the second WebRTC terminal and the third-party WebRTC terminal, to make each WebRTC terminal in the multi-party conference only send one media stream and receive one synthesized media stream.

In an exemplary embodiment, the media processing unit includes a media server; or the media processing unit includes a media gateway and a multi-point control unit.

In an exemplary embodiment, the media processing unit includes the media server; and
the step of the application server respectively assisting in establishing media connections between the first WebRTC terminal, the second WebRTC terminal and the third-party WebRTC terminal and the media processing unit, includes:
respectively assisting in completing media negotiation between the first WebRTC terminal, the second WebRTC terminal and the third-party WebRTC terminal and the media server, to make each WebRTC terminal and the media server establish a media channel between the WebRTC terminal and the media server by using a result of the media negotiation; or
respectively assisting in completing media negotiation between the first WebRTC terminal, the second WebRTC terminal and the third-party WebRTC terminal and the media server, to make each WebRTC terminal and the media server establish a media channel, via an Interactive Connectivity Establishment (ICE) relay server, between the WebRTC terminal and the media server by using a result of the media negotiation.

In an exemplary embodiment, the media processing unit includes the media gateway and the multi-point control unit; and
the step of the application server respectively assisting in establishing media connections between the first WebRTC terminal, the second WebRTC terminal and the third-party WebRTC terminal and the media processing unit, includes:
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel between the WebRTC terminal and the media gateway by using a result of the media negotiation, and the media gateway and the multi-point control unit establish a media channel between the media gateway and the multi-point control unit by using a result of the media negotiation; or
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel, via an ICE relay server, between the WebRTC terminal and the media gateway by using a result of the media negotiation, and the media gateway and the multi-point control unit establish a media channel between the media gateway and the multi-point control unit by using a result of the media negotiation.

In an exemplary embodiment, the step of the application server respectively assisting in establishing media connections between the first WebRTC terminal, the second WebRTC terminal and the third-party WebRTC terminal and the media processing unit, includes:
in a process that each WebRTC terminal and the media processing unit perform media negotiation, the application server converting a message sent by each WebRTC terminal to the media processing unit into a message format which can be recognized and processed by the media processing unit, and converting a message sent by the media processing unit to each WebRTC terminal into a message format which can be recognized and processed by the WebRTC terminal.

In an exemplary embodiment, the step of the application server controlling the media processing unit to establish the multi-party conference among the first WebRTC terminal, the second WebRTC terminal and the third-party WebRTC terminal, to make any one WebRTC terminal in the multi-party conference only send one media stream and receive one synthesized media stream, includes:
the application server interacting with the media processing unit, establishing a multi-party conference on the media processing unit and controlling the media processing unit to perform multi-party media synthesis and presentation, to make each WebRTC terminal in one multi-party conference only send one media stream to the media processing unit and receive one synthesized media stream sent by the media processing unit.

In an exemplary embodiment, the step of the application server interacting with the media processing unit, establishing the multi-party conference on the media processing unit and controlling the media processing unit to perform multi-party media synthesis and presentation, includes:
the application server sending a conference establishment request to the media processing unit and sending media synthesis and presentation policy information to the media processing unit after information about conference connection returned by the media processing unit is received, to make the media processing unit complete media stream synthesis of the multi-party conference according to the media synthesis and presentation policy information and complete media stream distribution by using the media connection between the media processing unit and each WebRTC terminal in the multi-party conference.

The embodiment of the present invention further provides an application server for Web Real-Time Communication (WebRTC), including a first media connection establishment module and a conference establishment control module.

The first media connection establishment module is configured to, after a message indicating that a first WebRTC terminal decides to add other one or more third-party WebRTC terminals to a communication which has already established between the first WebRTC terminal and a second WebRTC terminal is received, respectively assist in establishing media connections between the first WebRTC terminal, the second WebRTC terminal and the third-party WebRTC terminal and a media processing unit, and shut down a point-to-point media connection between the first WebRTC terminal and the second WebRTC terminal.

The conference establishment control module is configured to control the media processing unit to establish a multi-party conference among the first WebRTC terminal, the second WebRTC terminal and the third-party WebRTC terminal, to make each WebRTC terminal in the multi-party conference only send one media stream and receive one synthesized media stream.

In an exemplary embodiment, the media processing unit includes a media server; and
the first media connection establishment module is configured to respectively assist in establishing media connections between the first WebRTC terminal, the second WebRTC terminal and the third-party WebRTC terminal and the media processing unit according to the following mode:
respectively assisting in completing media negotiation between the first WebRTC terminal, the second WebRTC terminal and the third-party WebRTC terminal and the media server, to make each WebRTC terminal and the media server establish a media channel between the WebRTC terminal and the media server by using a result of the media negotiation; or
respectively assisting in completing media negotiation between the first WebRTC terminal, the second WebRTC terminal and the third-party WebRTC terminal and the media server, to make each WebRTC terminal and the media server establish a media channel, via an Interactive Connectivity Establishment (ICE) relay server, between the WebRTC terminal and the media server by using a result of the media negotiation.

In an exemplary embodiment, the media processing unit includes a media gateway and a multi-point control unit; and
the first media connection establishment module is configured to respectively assist in establishing media connections between the first WebRTC terminal, the second WebRTC terminal and the third-party WebRTC terminal and the media processing unit according to the following mode:
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel between the WebRTC terminal and the media gateway by using a result of the media negotiation, and the media gateway and the multi-point control unit establish a media channel between the media gateway and the multi-point control unit by using a result of the media negotiation; or
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel, via an ICE relay server, between the WebRTC terminal and the media gateway by using a result of the media negotiation, and the media gateway and the multi-point control unit establish a media channel between the media gateway and the multi-point control unit by using a result of the media negotiation.

In an exemplary embodiment, the first media connection establishment module is configured to respectively assist in establishing media connections between the first WebRTC terminal, the second WebRTC terminal and the third-party WebRTC terminal and the media processing unit according to the following mode:
in a process that each WebRTC terminal and the media processing unit perform media negotiation, converting a message sent by each WebRTC terminal to the media processing unit into a message format which is capable of being recognized and processed by the media processing unit, and converting a message sent by the media processing unit to each WebRTC terminal into a message format which is capable of being recognized and processed by the WebRTC terminal.

In an exemplary embodiment, the conference establishment control module is configured to control the media processing unit to establish the multi-party conference among the first WebRTC terminal, the second WebRTC terminal and the third-party WebRTC terminal, to make any one WebRTC terminal in the multi-party conference only send one media stream and receive one synthesized media stream according to the following mode:
interacting with the media processing unit, establishing a multi-party conference on the media processing unit and controlling the media processing unit to perform multi-party media synthesis and presentation, to make each WebRTC terminal in one multi-party conference only send one media stream to the media processing unit and receive one synthesized media stream sent by the media processing unit.

In an exemplary embodiment, the conference establishment control module is configured to interact with the media processing unit, establish the multi-party conference on the media processing unit and control the media processing unit to perform multi-party media synthesis and presentation according to the following mode:
sending a conference establishment request to the media processing unit and sending media synthesis and presentation policy information to the media processing unit after information about conference connection returned by the media processing unit is received, to make the media processing unit complete media stream synthesis of the multi-party conference according to the media synthesis and presentation policy information and complete media stream distribution by using the media connection between the media processing unit and each WebRTC terminal in the multi-party conference.

The embodiment of the present invention further provides a media processing method for Web Real-Time Communication (WebRTC). Processing executed by a media processing unit includes:
the media processing unit respectively establishing a media connection between the media processing unit and each WebRTC terminal in multiple WebRTC terminals based on assistance of an application server; and
the media processing unit interacting with the application server, establishing a multi-party conference and performing multi-party media synthesis and presentation, to make each WebRTC terminal in one multi-party conference only send one media stream to the media processing unit and receive one synthesized media stream sent by the media processing unit.

In an exemplary embodiment, the media processing unit includes a media server; or the media processing unit includes a media gateway and a multi-point control unit.

In an exemplary embodiment, the media processing unit includes the media server; and
the step of the media processing unit respectively establishing the media connection between the media processing unit and each WebRTC terminal in the multiple WebRTC terminals based on assistance of the application server, includes:
respectively completing media negotiation between the media processing unit and each WebRTC terminal in the multiple WebRTC terminals based on assistance of the application server, and establishing a media channel between the media processing unit and each WebRTC terminal in the multiple WebRTC terminals by using a result of the media negotiation; or
respectively completing media negotiation between the media processing unit and each WebRTC terminal in the multiple WebRTC terminals based on assistance of the application server, and establishing a media channel, via an Interactive Connectivity Establishment ICE relay server, between the media processing unit and each WebRTC terminal in the multiple WebRTC terminals by using a result of the media negotiation.

In an exemplary embodiment, the media processing unit includes the media gateway and the multi-point control unit; and
the step of the media processing unit respectively establishing the media connection between the media processing unit and each WebRTC terminal in the multiple WebRTC terminals based on assistance of the application server includes:
respectively completing media negotiation between each WebRTC terminal in the multiple WebRTC terminals and the media gateway and media negotiation between the media gateway and the multi-point control unit based on assistance of the application server, and establishing a media channel between the media gateway and each WebRTC terminal in the multiple WebRTC terminals and a media channel between the media gateway and the multi-point control unit by using results of the media negotiation; or
respectively completing media negotiation between each WebRTC terminal in the multiple WebRTC terminals and the media gateway and media negotiation between the media gateway and the multi-point control unit based on assistance of the application server, and establishing a media channel, via an Interactive Connectivity Establishment ICE relay server, between each WebRTC terminal in the multiple WebRTC terminals and the media gateway and a media channel between the media gateway and the multi-point control unit by using results of the media negotiation.

In an exemplary embodiment, the step of the media processing unit interacting with the application server, establishing the multi-party conference and performing multi-party media synthesis and presentation includes:
the media processing unit receiving a conference establishment request sent by the application server, returning information about conference connection to the media processing unit, receiving media synthesis and presentation policy information sent by the application server, completing media stream synthesis of the multi-party conference according to the media synthesis and presentation policy information and completing media stream distribution by using the media connection between the media processing unit and each WebRTC terminal in the multi-party conference.

The embodiment of the present invention further provides a media processing unit for Web Real-Time Communication (WebRTC), including a second media connection establishment module and a conference establishment and media stream synthesis and presentation module.

The second media connection establishment module is configured to respectively establish a media connection between the media processing unit and each WebRTC terminal in multiple WebRTC terminals based on assistance of an application server.

The conference establishment and media stream synthesis and presentation module is configured to interact with the application server, establish a multi-party conference and perform multi-party media synthesis and presentation, to make each WebRTC terminal in one multi-party conference only send one media stream to the media processing unit and receive one synthesized media stream sent by the media processing unit.

In an exemplary embodiment, the media processing unit includes a media server; or the media processing unit includes a media gateway and a multi-point control unit.

In an exemplary embodiment, the media processing unit includes the media server; and
the second media connection establishment module is configured to respectively establish the media connection between the media processing unit and each WebRTC terminal in the multiple WebRTC terminals based on assistance of the application server according to the following mode:
respectively completing media negotiation between the media processing unit and each WebRTC terminal in the multiple WebRTC terminals based on assistance of the application server, and establishing a media channel between the media processing unit and each WebRTC terminal in the multiple WebRTC terminals by using a result of the media negotiation; or
respectively completing media negotiation between the media processing unit and each WebRTC terminal in the multiple WebRTC terminals based on assistance of the application server, and establishing a media channel, via an Interactive Connectivity Establishment ICE relay server, between the media processing unit and each WebRTC terminal in the multiple WebRTC terminals by using a result of the media negotiation.

In an exemplary embodiment, the media processing unit includes the media gateway and the multi-point control unit; and
the second media connection establishment module is configured to respectively establish the media connection between the media processing unit and each WebRTC terminal in the multiple WebRTC terminals based on assistance of the application server according to the following mode:
respectively completing media negotiation between each WebRTC terminal in the multiple WebRTC terminals and the media gateway and media negotiation between the media gateway and the multi-point control unit based on assistance of the application server, and establishing a media channel between the media gateway and each WebRTC terminal in the multiple WebRTC terminals and a media channel between the media gateway and the multi-point control unit by using results of the media negotiation; or
respectively completing media negotiation between each WebRTC terminal in the multiple WebRTC terminals and the media gateway and media negotiation between the media gateway and the multi-point control unit based on assistance of the application server, and establishing a media channel, via an Interactive Connectivity Establishment ICE relay server, between each WebRTC terminal in the multiple WebRTC terminals and the media gateway and a media channel between the media gateway and the multi-point control unit by using results of the media negotiation.

In an exemplary embodiment, the conference establishment and media stream synthesis and presentation module is configured to interact with the application server, establish the multi-party conference and perform multi-party media synthesis and presentation according to the following mode:
receiving a conference establishment request sent by the application server, returning information about conference connection to the media processing unit, receiving media synthesis and presentation policy information sent by the application server, completing media stream synthesis of the multi-party conference according to the media synthesis and presentation policy information and completing media stream distribution by using the media connection between the media processing unit and each WebRTC terminal in the multi-party conference.

The embodiment of the present invention further provides a media processing method for Web Real-Time Communication (WebRTC). Processing executed by a WebRTC terminal includes:
each WebRTC terminal participating in a multi-party conference establishing a media connection with a media processing unit based on assistance of an application server; and
after the media processing unit establishes the multi-party conference, each WebRTC terminal in the multi-party conference sending one media stream to the media processing unit and receiving one synthesized media stream sent by the media processing unit.

In an exemplary embodiment, the method further includes: the WebRTC terminal as a chair of the multi-party conference firstly establishing a point-to-point real-time multimedia communication with one WebRTC terminal participating in the conference, and when two-party communication turns to multi-party communication, sending a message of deciding to add one or more third-party WebRTC terminals to the communication to the application server.

In an exemplary embodiment, the media processing unit includes a media server; and
the step of each WebRTC terminal participating in the multi-party conference establishing the media connection with the media processing unit based on assistance of the application server, includes:
each WebRTC terminal participating in the multi-party conference completing media negotiation between the WebRTC terminal and the media server based on assistance of the application server, and establishing a media channel between the present WebRTC terminal and the media server by using a result of the media negotiation; or
each WebRTC terminal participating in the multi-party conference completing media negotiation between the WebRTC terminal and the media server based on assistance of the application server, and establishing a media channel, via an Interactive Connectivity Establishment (ICE) relay server, between the present WebRTC terminal and the media server by using a result of the media negotiation.

In an exemplary embodiment, the media processing unit includes a media gateway and a multi-point control unit; and
the step of each WebRTC terminal participating in the multi-party conference establishing the media connection with the media processing unit based on assistance of the application server, includes:
each WebRTC terminal participating in the multi-party conference completing media negotiation between the WebRTC terminal and the media gateway based on assistance of the application server, and establishing a media channel between the present WebRTC terminal and the media gateway by using a result of the media negotiation; or
each WebRTC terminal participating in the multi-party conference completing media negotiation between the WebRTC terminal and the media gateway based on assistance of the application server, and establishing a media channel, via an ICE relay server, between the present WebRTC terminal and the media gateway by using a result of the media negotiation.

The embodiment of the present invention further provides a Web Real-Time Communication (WebRTC) terminal, including a third media connection establishment module and a media sending and receiving module.

The third media connection establishment module is configured to establish a media connection with a media processing unit based on assistance of an application server.

The media sending and receiving module is configured to, after the media processing unit establishes the multi-party conference, send one media stream to the media processing unit and receive one synthesized media stream sent by the media processing unit in the multi-party conference.

In an exemplary embodiment, the terminal further includes a chair module configured to, when the WebRTC terminal acts as a chair of the multi-party conference, firstly establish a point-to-point real-time multimedia communication with one WebRTC terminal participating in the conference, and when two party communication turns to multi-party communication, send a message of deciding to add one or more third-party WebRTC terminals to the communication to the application server.

In an exemplary embodiment, the media processing unit includes a media server; and
the third media connection establishment module is configured to establish the media connection with the media processing unit based on assistance of the application server according to the following mode:
completing media negotiation between the WebRTC terminal and the media server based on assistance of the application server, and establishing a media channel between the present WebRTC terminal and the media server by using a result of the media negotiation; or
completing media negotiation between the WebRTC terminal and the media server based on assistance of the application server, and establishing a media channel, via an Interactive Connectivity Establishment (ICE) relay server, between the present WebRTC terminal and the media server by using a result of the media negotiation.

In an exemplary embodiment, the media processing unit includes a media gateway and a multi-point control unit; and
the third media connection establishment module is configured to establish the media connection with the media processing unit based on assistance of the application server according to the following mode:
completing media negotiation between the WebRTC terminal and the media gateway based on assistance of the application server, and establishing a media channel between the present WebRTC terminal and the media gateway by using a result of the media negotiation; or
completing media negotiation between the WebRTC terminal and the media gateway based on assistance of the application server, and establishing a media channel, via an Interactive Connectivity Establishment ICE relay server, between the present WebRTC terminal and the media gateway by using a result of the media negotiation.

The embodiment of the present invention further provides a computer storage medium, storing computer-executable instructions used for executing the above methods.

In order to fully use the advantages of the WebRTC technology and effectively avoid the defects, this document provides an adaptive media processing method and device for WebRTC. By using the method and the device, under a scenario of audio and video conversation between two parties, a point-to-point media scheme of WebRTC itself is used and the advantages of the WebRTC technology is fully used. Once under a scenario of audio and video conference among multiple parties, it is to switch to a media processing scheme based on a center node. Based on this, the user experience of services can be optimized and improved.

It should be pointed out here that, although the embodiments of the present invention emphatically describe a media processing scheme for switching from two-party point-to-point communication to multi-party multimedia communication based on a center node in the WebRTC field. However, apparently, a media processing scheme for switching from multi-party point-to-point multimedia communication to multi-party multimedia communication based on a center node in this field can be very easily deduced according to the embodiments of the present invention. In order to save the space, this document does not describe the specific implementation of the media processing scheme for switching from multi-party point-to-point multimedia communication to multi-party multimedia communication based on the center node in the WebRTC field any longer.

After the drawings and detailed description are read and understood, other aspects may be understood.

### Brief Description of Drawings

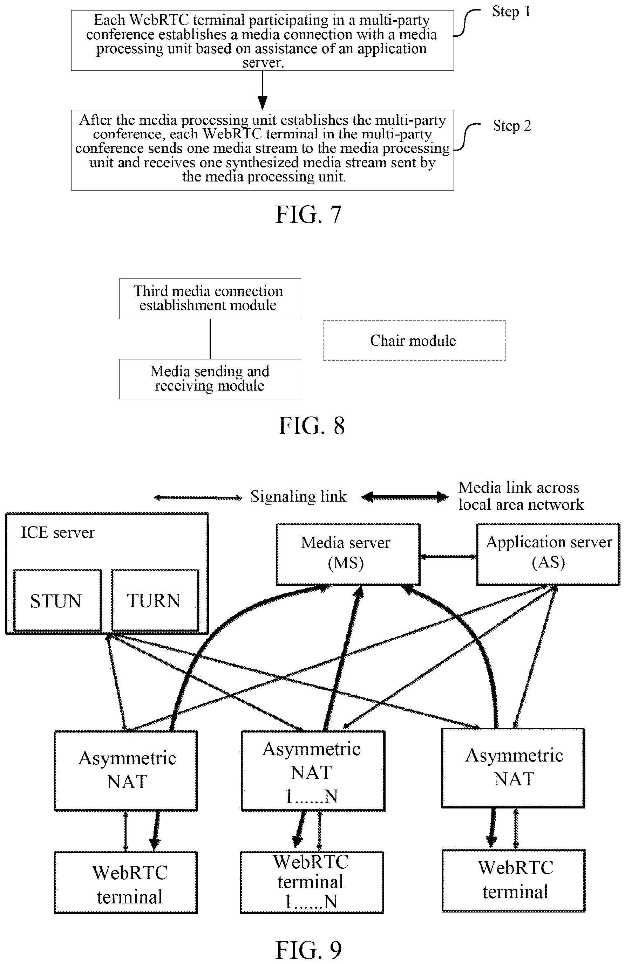

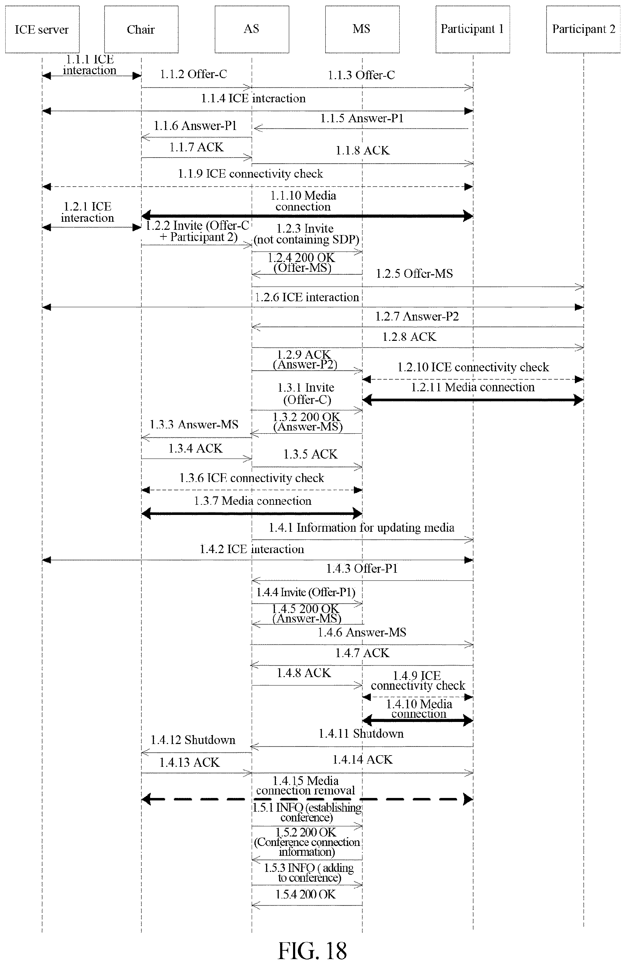

It should be specially pointed out that the drawings described below are just used as partial representative embodiments of the present invention. It should stated that, in FIG. 9-12, thin solid lines represent signaling links and thick solid lines represent media links. In the embodiments illustrated in FIG. 18-25, the most representative core process of switching from a scenario of two-party point-to-point communication to a scenario of three-party conference is only selected, and accordingly a process of switching from two-party point-to-point communication to four-party or more-party conference can be very easily deduced. One skilled in the art may obtain other related schemes or processes according to these drawings without contributing any creative labor.
FIG. 1 illustrates a diagram of a typical point-to-point media processing scheme for WebRTC.
FIG. 2 illustrates a diagram of a point-to-point media processing scheme in a WebRTC relay mode.
FIG. 3 illustrates a flowchart of processing executed by an application server according to embodiment 1 of the present invention.
FIG. 4 illustrates a structural schematic diagram of an application server according to embodiment 1 of the present invention.
FIG. 5 illustrates a flowchart of processing executed by a media processing unit according to embodiment 2 of the present invention.
FIG. 6 illustrates a structural schematic diagram of a media processing unit according to embodiment 2 of the present invention.
FIG. 7 illustrates a flowchart of processing executed by a media processing unit according to embodiment 3 of the present invention.
FIG. 8 illustrates a structural schematic diagram of a WebRTC terminal according to embodiment 3 of the present invention.
FIG. 9 illustrates an architecture diagram of a multi-party media processing system without a media relay under a situation that a media server supports a WebRTC protocol stack.
FIG. 10 illustrates an architecture diagram of a multi-party media processing system with a media relay under a situation that a media server supports a WebRTC protocol stack.
FIG. 11 illustrates an architecture diagram of a multi-party media processing system without a media relay under a situation that a multi-point control unit does not support a WebRTC protocol stack.
FIG. 12 illustrates an architecture diagram of a multi-party media processing system with a media relay under a situation that a multi-point control unit does not support a WebRTC protocol stack.
FIG. 13 illustrates a schematic diagram of a WebRTC terminal.
FIG. 14 illustrates a schematic diagram of core modules of an application server (AS).
FIG. 15 illustrates a schematic diagram of core modules of a media server supporting a WebRTC protocol stack.
FIG. 16 illustrates a schematic diagram of core modules of a multi-point control unit.
FIG. 17 illustrates a schematic diagram of core modules of a media gateway.
FIG. 18 illustrates a core flowchart of WebRTC adaptive media processing of first calling in a third party without a media relay under a situation that a media server supports a WebRTC protocol stack in application example 1 of the present invention.
FIG. 19 illustrates a core flowchart of WebRTC adaptive media processing of first calling in a third party with a media relay under a situation that a media server supports a WebRTC protocol stack in application example 2 of the present invention.
FIG. 20 illustrates a core flowchart of WebRTC adaptive media processing of later calling in a third party without a media relay under a situation that a media server supports a WebRTC protocol stack in application example 3 of the present invention.
FIG. 21 illustrates a core flowchart of WebRTC adaptive media processing of later calling in a third party with a media relay under a situation that a media server supports a WebRTC protocol stack in application example 4 of the present invention.
FIG. 22 illustrates a core flowchart of WebRTC adaptive media processing of first calling in a third party without a media relay under a situation that a multi-point control unit does not support a WebRTC protocol stack in application example 5 of the present invention.
FIG. 23 illustrates a core flowchart of WebRTC adaptive media processing of first calling in a third party with a media relay under a situation that a multi-point control unit does not support a WebRTC protocol stack in application example 6 of the present invention.
FIG. 24 illustrates a core flowchart of WebRTC adaptive media processing of later calling in a third party without a media relay under a situation that a multi-point control unit does not support a WebRTC protocol stack in application example 7 of the present invention.
FIG. 25 illustrates a core flowchart of WebRTC adaptive media processing of later calling in a third party with a media relay under a situation that a multi-point control unit does not support a WebRTC protocol stack in application example 8 of the present invention.

### Detailed Description

The embodiments of the present invention will be described below in detail with reference to the drawings. It should be stated that the embodiments in the present application and the features in the embodiments may be mutually and freely combined under a situation of no conflict. The embodiments described in this document are just partial more representative embodiments rather than all embodiments.

Steps illustrated in flowcharts of the drawings may be executed in a computer system including a group of computer-executable instructions, for example. In addition, although logic sequences are illustrated in flowcharts, the illustrated or described steps may be executed according to sequences different from the sequences here under certain situations.

### Embodiment 1

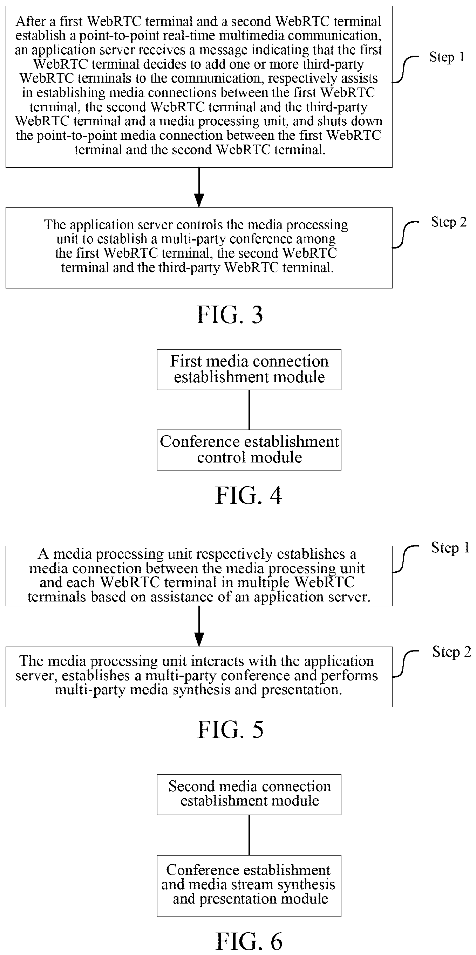

This embodiment describes a media processing method for Web Real-Time Communication WebRTC. As illustrated in FIG. 3, processing executed by an application server includes the following steps.

In step 1, after a first WebRTC terminal and a second WebRTC terminal establish a point-to-point real-time multimedia communication, an application server receives a message indicating that the first WebRTC terminal decides to add one or more third-party WebRTC terminals to the communication, respectively assists in establishing media connections between the first WebRTC terminal, the second WebRTC terminal and the third-party WebRTC terminal and a media processing unit, and shuts down the point-to-point media connection between the first WebRTC terminal and the second WebRTC terminal.

The media processing unit includes a media server or includes a media gateway and a multi-point control unit. Core functions of the media server and the multi-point control unit include media stream synthesis. In order to facilitate the description, it is supposed that the media server in this document supports a WebRTC protocol stack and the multi-point control unit does not support a WebRTC protocol stack.

When the media processing unit includes a media server, according to a situation of whether an Interactive Connectivity Establishment (ICE) server is used as a media relay between the media server and each WebRTC terminal, the media connection may be established by using one of the following modes:
under a situation that the ICE server is not used as a media relay, the application server respectively assists in completing media negotiation between the first WebRTC terminal, the second WebRTC terminal and the third-party WebRTC terminal and the media server, such that each WebRTC terminal and the media server establish a media channel between the both parties by using a result of the media negotiation;
under a situation that the ICE server is used as a media relay, the application server respectively assists in completing media negotiation between the first WebRTC terminal, the second WebRTC terminal and the third-party WebRTC terminal and the media server such that each WebRTC terminal and the media server establish a media channel, via an ICE relay server, between the both parties by using a result of the media negotiation.

When the media processing unit includes a media gateway and a multi-point control unit, according to a situation of whether an ICE server is used as a media relay between the media gateway and each WebRTC terminal, the media connection may be established by using one of the following modes:
under a situation that the ICE server is not used as a media relay, the application server respectively assists in completing media negotiation between the first WebRTC terminal, the second WebRTC terminal and the third-party WebRTC terminal and the media gateway and media negotiation between the media gateway and the multi-point control unit such that each WebRTC terminal and the media gateway establish a media channel between the both parties by using a result of the media negotiation, and the media gateway and the multi-point control unit establish a media channel between the both parties by using a result of the media negotiation;
under a situation that the ICE server is used as a media relay, the application server respectively assists in completing media negotiation between the first WebRTC terminal, the second WebRTC terminal and the third-party WebRTC terminal and the media gateway and media negotiation between the media gateway and the multi-point control unit such that each WebRTC terminal and the media gateway establish a media channel, via an ICE relay server, between the both parties by using a result of the media negotiation, and the media gateway and the multi-point control unit establish a media channel between the both parties by using a result of the media negotiation.

In an implementation mode, in a process that each WebRTC terminal and the media processing unit perform media negotiation, the application server converts a message sent by each WebRTC terminal to the media processing unit into a message format which can be recognized and processed by the media processing unit, and converts a message sent by the media processing unit to each WebRTC terminal into a message format which can be recognized and processed by the WebRTC terminal.

In step 2, the application server controls the media processing unit to establish a multi-party conference among the first WebRTC terminal, the second WebRTC terminal and the third-party WebRTC terminal such that each WebRTC terminal in the multi-party conference only sends one media stream and receive one synthesized media stream.

In this step, the application server interacts with the media processing unit, establishes a multi-party conference on the media processing unit and controls the media processing unit to perform multi-party media synthesis and presentation such that each WebRTC terminal in one multi-party conference only sends one media stream to the media processing unit and receive one synthesized media stream sent by the media processing unit.

In an implementation mode, the application server sends a conference establishment request to the media processing unit and sends media synthesis and presentation policy information to the media processing unit after information about conference connection returned by the media processing unit is received, such that the media processing unit completes media stream synthesis of the multi-party conference according to the media synthesis and presentation policy information and completes media stream distribution by using the media connection between the media processing unit and each WebRTC terminal in the multi-party conference.

This embodiment of the present invention further provides a computer storage medium storing computer-executable instructions used for executing the above method.

This embodiment of the present invention further provides an application server. As illustrated in FIG. 4, the application server includes a first media connection establishment module and a conference establishment control module.

The first media connection establishment module is configured to, after a message indicating that a first WebRTC terminal decides to add other one or more third-party WebRTC terminals to a communication which has already established between the first WebRTC terminal and a second WebRTC terminal is received, respectively assist in establishing media connections between the first WebRTC terminal, the second WebRTC terminal and the third-party WebRTC terminal and a media processing unit, and shut down a point-to-point media connection between the first WebRTC terminal and the second WebRTC terminal.

The conference establishment control module is configured to control the media processing unit to establish a multi-party conference among the first WebRTC terminal, the second WebRTC terminal and the third-party WebRTC terminal such that each WebRTC terminal in the multi-party conference only sends one media stream and receive one synthesized media stream.

The media processing unit includes a media server:
the first media connection establishment module is configured to respectively assist in completing media negotiation between the first WebRTC terminal, the second WebRTC terminal and the third-party WebRTC terminal and the media server such that each WebRTC terminal and the media server establish a media channel between the both parties by using a result of the media negotiation; or
the first media connection establishment module is configured to respectively assist in completing media negotiation between the first WebRTC terminal, the second WebRTC terminal and the third-party WebRTC terminal and the media server such that each WebRTC terminal and the media server establish a media channel, via an ICE relay server, between the both parties by using a result of the media negotiation.

The media processing unit includes a media gateway and a multi-point control unit:
the first media connection establishment module is configured to respectively assist in completing media negotiation between the first WebRTC terminal, the second WebRTC terminal and the third-party WebRTC terminal and the media gateway and media negotiation between the media gateway and the multi-point control unit such that each WebRTC terminal and the media gateway establish a media channel between the both parties by using a result of the media negotiation, and the media gateway and the multi-point control unit establish a media channel between the both parties by using a result of the media negotiation; or
the first media connection establishment module is configured to respectively assist in completing media negotiation between the first WebRTC terminal, the second WebRTC terminal and the third-party WebRTC terminal and the media gateway and media negotiation between the media gateway and the multi-point control unit such that each WebRTC terminal and the media gateway establish a media channel, via an ICE relay server, between the both parties by using a result of the media negotiation, and the media gateway and the multi-point control unit establish a media channel between the both parties by using a result of the media negotiation.

In a process that each WebRTC terminal and the media processing unit perform media negotiation, the first media connection establishment module is configured to convert a message sent by each WebRTC terminal to the media processing unit into a message format which can be recognized and processed by the media processing unit, and convert a message sent by the media processing unit to each WebRTC terminal into a message format which can be recognized and processed by the WebRTC terminal.

In this embodiment, the conference establishment control module is configured to interact with the media processing unit, establish a multi-party conference on the media processing unit and control the media processing unit to perform multi-party media synthesis and presentation such that each WebRTC terminal in one multi-party conference only sends one media stream to the media processing unit and receive one synthesized media stream sent by the media processing unit.

In an implementation mode, the conference establishment control module is configured to send a conference establishment request to the media processing unit and send media synthesis and presentation policy information to the media processing unit after information about conference connection returned by the media processing unit is received, such that the media processing unit completes media stream synthesis of the multi-party conference according to the media synthesis and presentation policy information and completes media stream distribution by using the media connection between the media processing unit and each WebRTC terminal in the multi-party conference.

By using the method and the device provided by this embodiment, the requirement on the user terminal processing capability is low, the bandwidth consumption is small, and under a scenario of multi-user real-time multimedia communication, the flexibility and the competitiveness of WebRTC services are improved and the user experience is good.

### Embodiment 2

This embodiment describes a media processing method for Web Real-Time Communication (WebRTC). As illustrated in FIG. 5, processing executed by a media processing unit includes the following steps.

In step 1, a media processing unit respectively establishes a media connection between the media processing unit and each WebRTC terminal in multiple WebRTC terminals based on assistance of an application server.

When the media processing unit includes a media server, according to a situation of whether an ICE server is used as a media relay between the media server and each WebRTC terminal, the media connection may be established by using one of the following modes:
under a situation that the ICE server is not needed to be used as a media relay, media negotiation between the media server and each WebRTC terminal in the multiple WebRTC terminals is respectively completed based on assistance of the application server, and a media channel is established between the media server and each WebRTC terminal in the multiple WebRTC terminals by using a result of the media negotiation;
under a situation that the ICE server is used as a media relay, media negotiation between the media server and each WebRTC terminal in the multiple WebRTC terminals is respectively completed based on assistance of the application server, and a media channel, via an ICE relay server, between the media server and each WebRTC terminal in the multiple WebRTC terminals is established by using a result of the media negotiation.

When the media processing unit includes a media gateway and a multi-point control unit, according to a situation of whether an ICE server is used as a media relay between the media gateway and each WebRTC terminal, the media connection may be established by using one of the following modes:
under a situation that the ICE server is not used as a media relay, media negotiation between each WebRTC terminal in the multiple WebRTC terminals and the media gateway and media negotiation between the media gateway and the multi-point control unit are respectively completed based on assistance of the application server, and a media channel between the media gateway and each WebRTC terminal in the multiple WebRTC terminals and a media channel between the media gateway and the multi-point control unit are established by using results of the media negotiation;
under a situation that the ICE server is used as a media relay, media negotiation between each WebRTC terminal in the multiple WebRTC terminals and the media gateway and media negotiation between the media gateway and the multi-point control unit are respectively completed based on assistance of the application server, and a media channel, via an ICE relay server, between each WebRTC terminal in the multiple WebRTC terminals and the media gateway and a media channel between the media gateway and the multi-point control unit are established by using results of the media negotiation.

In step 2, the media processing unit interacts with the application server, establishes a multi-party conference and performs multi-party media synthesis and presentation such that each WebRTC terminal in one multi-party conference only sends one media stream to the media processing unit and receives one synthesized media stream sent by the media processing unit.

In this step, the media processing unit receives a conference establishment request sent by the application server, returns information about conference connection to the media processing unit, receives media synthesis and presentation policy information sent by the application server, completes media stream synthesis of the multi-party conference according to the media synthesis and presentation policy information and completes media stream distribution by using the media connection between the media processing unit and each WebRTC terminal in the multi-party conference.

This embodiment of the present invention further provides a computer storage medium storing computer-executable instructions used for executing the above method.

This embodiment of the present invention further provides a media processing unit. As illustrated in FIG. 6, the media processing unit includes a second media connection establishment module and a conference establishment and media stream synthesis and presentation module.

The second media connection establishment module is configured to respectively establish a media connection between the media processing unit and each WebRTC terminal in multiple WebRTC terminals based on assistance of an application server.

The conference establishment and media stream synthesis and presentation module is configured to interact with the application server, establish a multi-party conference and perform multi-party media synthesis and presentation such that each WebRTC terminal in one multi-party conference only sends one media stream to the media processing unit and receive one synthesized media stream sent by the media processing unit.

The media processing unit includes a media server:
the second media connection establishment module is configured to respectively complete media negotiation between the media server and each WebRTC terminal in the multiple WebRTC terminals based on assistance of the application server, and establish a media channel between the both parties of the media server and each WebRTC terminal in the multiple WebRTC terminals by using a result of the media negotiation; or
the second media connection establishment module is configured to respectively complete media negotiation between the media server and each WebRTC terminal in the multiple WebRTC terminals based on assistance of the application server, and establish a media channel, via an ICE relay server, between the both parties of the media server and each WebRTC terminal in the multiple WebRTC terminals by using a result of the media negotiation.

The media processing unit includes a media gateway and a multi-point control unit:
the second media connection establishment module is configured to respectively complete media negotiation between each WebRTC terminal in the multiple WebRTC terminals and the media gateway and media negotiation between the media gateway and the multi-point control unit based on assistance of the application server, and establish a media channel between the media gateway and each WebRTC terminal in the multiple WebRTC terminals and a media channel between the media gateway and the multi-point control unit by using results of the media negotiation; or
the second media connection establishment module is configured to respectively complete media negotiation between each WebRTC terminal in the multiple WebRTC terminals and the media gateway and media negotiation between the media gateway and the multi-point control unit based on assistance of the application server, and establish a media channel, via an ICE relay server, between each WebRTC terminal in the multiple WebRTC terminals and the media gateway and a media channel between the media gateway and the multi-point control unit by using results of the media negotiation.

In this embodiment, the conference establishment and media stream synthesis and presentation module is configured to receive a conference establishment request sent by the application server, return information about conference connection to the media processing unit, receive media synthesis and presentation policy information sent by the application server, complete media stream synthesis of the multi-party conference according to the media synthesis and presentation policy information and complete media stream distribution by using the media connection between the media processing unit and each WebRTC terminal in the multi-party conference.

By using the method and the device provided by this embodiment, the requirement on the user terminal processing capability is low, the bandwidth consumption is small, and under a scenario of multi-user real-time multimedia communication, the flexibility and the competitiveness of WebRTC services are improved and the user experience is good.

### Embodiment 3

This embodiment describes a media processing method for Web Real-Time Communication (WebRTC). As illustrated in FIG. 7, processing executed by a WebRTC terminal includes the following steps.

In step 1, each WebRTC terminal participating in a multi-party conference establishes a media connection with a media processing unit based on assistance of an application server.

In an implementation mode, the WebRTC terminal as a chair of the multi-party conference firstly establishes a point-to-point real-time multimedia communication with one WebRTC terminal participating in the conference, and when two-party communication turns to multi-party communication, sends a message of deciding to add one or more third-party WebRTC terminals to the communication to the application server.

When the media processing unit includes a media server, according to a situation of whether an ICE server is used as a media relay between the media server and each WebRTC terminal, the media connection may be established by using one of the following modes:
each WebRTC terminal participating in the multi-party conference completes media negotiation between the WebRTC terminal and the media server based on assistance of the application server, and establishes a media channel between the present WebRTC terminal and the media server by using a result of the media negotiation;
each WebRTC terminal participating in the multi-party conference completes media negotiation between the WebRTC terminal and the media server based on assistance of the application server, and establishes a media channel, via an ICE relay server, between the present WebRTC terminal and the media server by using a result of the media negotiation.

When the media processing unit includes a media gateway and a multi-point control unit, according to a situation of whether an ICE server is used as a media relay between the media gateway and each WebRTC terminal, the media connection may be established by using one of the following modes:
each WebRTC terminal participating in the multi-party conference completes media negotiation between the WebRTC terminal and the media gateway based on assistance of the application server, and establishes a media channel between the present WebRTC terminal and the media gateway by using a result of the media negotiation; or
each WebRTC terminal participating in the multi-party conference completes media negotiation between the WebRTC terminal and the media gateway based on assistance of the application server, and establishes a media channel, via an ICE relay server, between the present WebRTC terminal and the media gateway by using a result of the media negotiation.

Assistance of the application server mainly includes converting a message sent by each WebRTC terminal to the media processing unit into a message format which can be recognized and processed by the media processing unit, and converting a message sent by the media processing unit to each WebRTC terminal into a message format which can be recognized and processed by the WebRTC terminal.

In step 2, after the media processing unit establishes the multi-party conference, each WebRTC terminal in the multi-party conference sends one media stream to the media processing unit and receives one synthesized media stream sent by the media processing unit.

This embodiment of the present invention further provides a computer storage medium storing computer-executable instructions used for executing the above method.

This embodiment of the present invention further provides a WebRTC terminal. As illustrated in FIG. 8, the WebRTC terminal includes a third media connection establishment module and a media sending and receiving module.

The third media connection establishment module is configured to establish a media connection with a media processing unit based on assistance of an application server.

The media sending and receiving module is configured to, after the media processing unit establishes the multi-party conference, send one media stream to the media processing unit and receive one synthesized media stream sent by the media processing unit in the multi-party conference.

In an implementation mode, the WebRTC terminal further includes a chair module configured to, when the WebRTC terminal acts as a chair of the multi-party conference, firstly establish a point-to-point real-time multimedia communication with one WebRTC terminal participating in the conference, and when two party communication turns to multi-party communication, send a message of deciding to add one or more third-party WebRTC terminals to the communication to the application server.

The media processing unit includes a media server; and
the third media connection establishment module is configured to complete media negotiation between the WebRTC terminal and the media server based on assistance of the application server, and establish a media channel between the present WebRTC terminal and the media server by using a result of the media negotiation; or
the third media connection establishment module is configured to complete media negotiation between the WebRTC terminal and the media server based on assistance of the application server, and establish a media channel, via an ICE relay server, between the present WebRTC terminal and the media server by using a result of the media negotiation.

The media processing unit includes a media gateway and a multi-point control unit:
the third media connection establishment module is configured to complete media negotiation between the WebRTC terminal and the media gateway based on assistance of the application server, and establish a media channel between the present WebRTC terminal and the media gateway by using a result of the media negotiation; or
the third media connection establishment module is configured to complete media negotiation between the WebRTC terminal and the media gateway based on assistance of the application server, and establish a media channel, via an ICE relay server, between the present WebRTC terminal and the media gateway by using a result of the media negotiation.

By using the method and the device provided by this embodiment, the requirement on the user terminal processing capability is low, the bandwidth consumption is small, and under a scenario of multi-user real-time multimedia communication, the flexibility and the competitiveness of WebRTC services are improved and the user experience is good.

Various network element nodes in multimedia processing systems for implementing the above-mentioned methods will be described below from a physical level.

FIG. 9 illustrates an architecture diagram of a multi-party media processing system without a media relay under a situation that a media server supports a WebRTC protocol stack. This system includes multiple WebRTC terminals, multiple asymmetric Network Address Translations (NATs), an application server (AS), a media server and an Interface Connectivity Establishment (ICE) server combining Simple Traversal of UDP over NATs (STUN) and Traversal Using Relays around NAT (TURN) NAT traversal solutions.

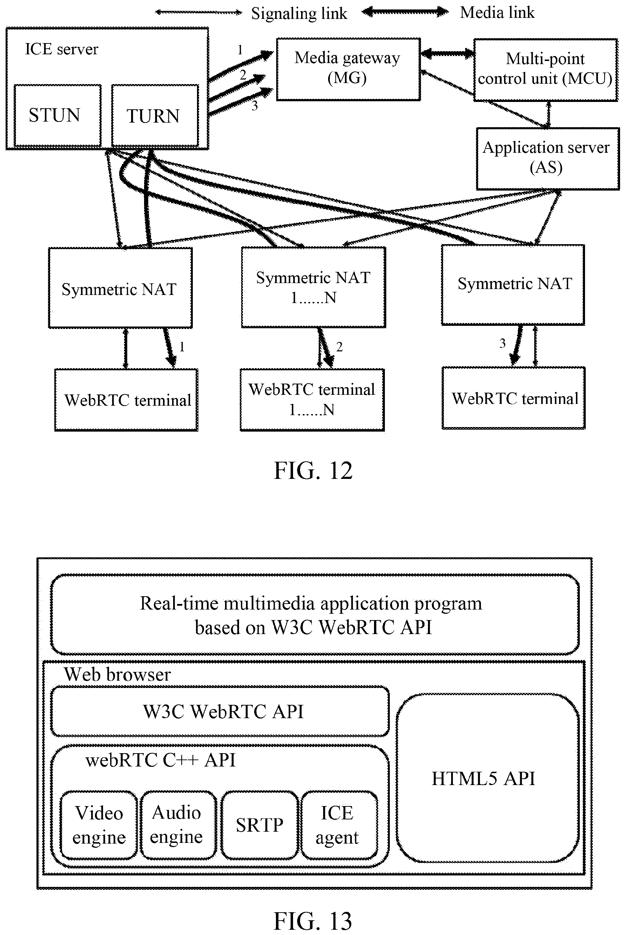

A WebRTC terminal has a structure illustrated in FIG. 13 and includes a web browser supporting a WebRTC protocol stack and an HTML5 API, and a web real-time application program developed based on technologies such as WebRTC, HTML5, JavaScript or JSP (Java Server Page).

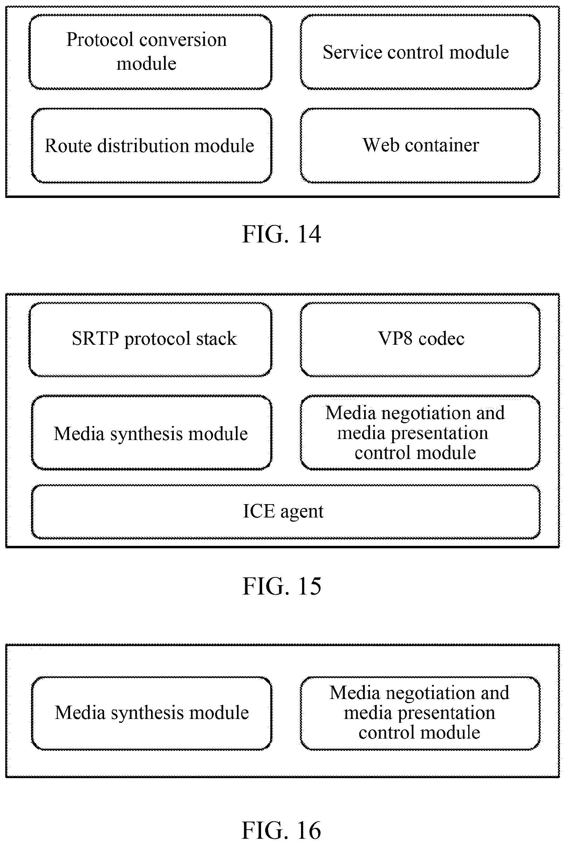

The application server (AS) has a structure illustrated in FIG. 14 and includes four major units, i.e., a protocol conversion module, a service control module, a route distribution module and a web container. The protocol conversion module is configured for protocol conversion work between Internet signaling (ROAP, JSON, etc.) and SIP signaling, to adapt to difference in signaling between the WebRTC terminal and the media server or a multi-point control unit. The service control module is configured for session logic, session initiation/notification/termination, media presentation policy control, etc.. The route distribution module is configured for signaling route selection between different WebRTC terminals, between a WebRTC terminal and a media gateway or between a WebRTC terminal and the media server. The web container provides a running environment for the WebRTC real-time communication application program and supports such as WebSocket and HTTP(s) long connection.

The media server has a structure illustrated in FIG. 15 and includes five major units, i.e., an SRTP protocol stack, a VP8 codec, a media synthesis module, a media negotiation and media presentation control module and an ICE agent. The SRTP protocol stack is configured to process an SRTP media stream sent by a WebRTC terminal. The VP8 codec is configured to decode a VP8 media stream of a WebRTC terminal or encode a multi-party media stream synthesized by the media synthesis module according to a VP8 format. The media synthesis module is configured to perform sound mixing and frequency mixing processing on multiple real-time media streams sent by multiple WebRTC terminals to obtain a uniform media stream. The media negotiation and media presentation control module is configured to complete negotiation with media signaling from the application server, receive a media presentation policy of the application server (AS) and control the media synthesis module to process synthesis of multiple media streams according to a given policy. The ICE agent is configured to complete a check of connectivity between the media server and each WebRTC terminal and provide a basis for establishment of a media link between the both parties.

The ICE server provides a support for NAT/firewall traversal. The ICE server includes two core units, i.e., an STUN server and a TURN server. The STUN server is configured to support traversal of asymmetric NATs, and the TURN server is configured to support traversal of symmetric NATs and firewalls. The ICE server receives an address collection request sent by the ICE agent in the WebRTC terminal and returns a collected WebRTC terminal host address, an outward public network address of a WebRTC terminal host (an NAT address provided by the STUN server) and a media relay address (provided by the TURN server) to the WebRTC terminal.

In FIG. 9, WebRTC terminals interact with the ICE server respectively to obtain local complete media plane SDP (Session Description Protocol) information (including audio and video coding and decoding, media encryption key and algorithm, ICE candidate addresses, etc.), and packages the information in an Internet signaling format such as ROAP (RTCWeb Offer/Answer Protocol) or JSON (JavaScript Object Notation), and sends the information to the application server via a transmission channel such as WebSocket or HTTP(s) long connection. The application server firstly judges whether the scenario is a two-party conversation scenario or a multi-party conference scenario according to the ROAP or JSON message.

When the application server judges that the scenario is a two-party conversation scenario, the application server directly forwards the ROAP or JSON message to a target WebRTC terminal and forwards an ROAP or JSON message including target WebRTC media negotiation information returned by the target WebRTC terminal to the calling WebRTC terminal. Thereafter, the calling WebRTC terminal and the called WebRTC terminal perform point-to-point communication according to a negotiated media link.

When the application server judges that the scenario is a multi-party conference scenario, the application server firstly converts ROAP information or JSON information into SIP information which can be recognized by the media server, and then forwards the SIP information to the media server. Correspondingly, the media server generates locally supported negotiation media plane SDP information (generally, media plane SDP information of one party which passively accepts negotiation is called as ANSWER) according to media plane information of these WebRTC terminals (generally, media plane SDP information of one party which actively initiates negotiation is called as OFFER), and returns it to each WebRTC terminal through an opposite path and mode. After the above-mentioned complete negotiation process, the WebRTC terminal and the media server obtain a media format, an encryption mode and a key supported by the both parties of communication and a candidate address of an opposite-end media link. The ICE agent of the WebRTC terminal and the ICE agent of the media server perform a connectivity check according to the above-mentioned candidate address. Once the both parties can be connected through a certain media link, the media link between the WebRTC terminal and the media server is established. When there are multiple media links, through which the both parties can be connected, between the WebRTC terminal and the media server, a priority of the WebRTC terminal host address is the highest, the priority of the outward public network address of the WebRTC terminal host (i.e., NAT address returned by the STUN server) is the secondly highest and the media relay address (i.e., address returned by the TURN server) is used as the last connection link choice. When the media server receives multiple media streams sent by each WebRTC terminal through the media link between the media server and each WebRTC terminal, synthesis processing such as sound mixing and frequency mixing is performed on these media streams according to the media presentation control policy information submitted by the application server to the media server, and finally one uniform media stream is generated and returned to each WebRTC terminal. Thereby, each WebRTC terminal only sends one media stream to the media server and receives one media stream sent by the media server such that mutual communication among multiple WebRTC terminals can be completed.

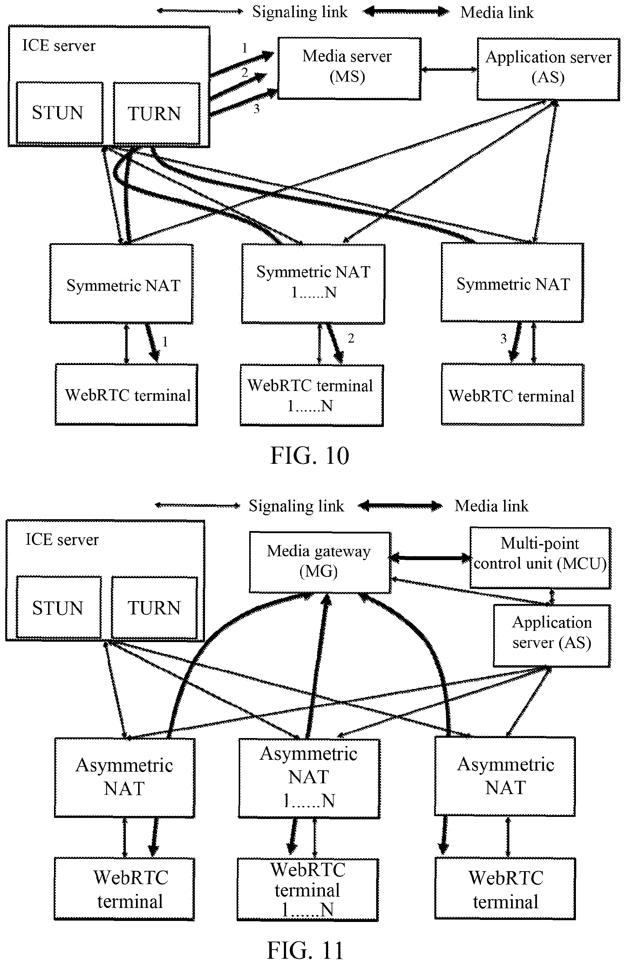

FIG. 10 illustrates an architecture diagram of a multi-party media processing system with a media relay under a situation that a media server supports a WebRTC protocol stack. The fundamental concept of FIG. 10 is consistent with the fundamental concept of FIG. 9, the network elements and the functions thereof in the system architecture are also the same. A major difference therebetween lies in that a media relay address has to be selected to forward all media streams under a situation that neither the WebRTC terminal host address nor the outward public network address of the WebRTC terminal host can complete media link connection with the media server. Under this situation, the media stream of each WebRTC terminal is forwarded to the media server via the ICE server. Similarly, the synthesized media stream returned by the media server is also sent to each WebRTC terminal via the ICE server.

FIG. 11 illustrates an architecture diagram of a multi-party media processing system without a media relay under a situation that an MCU (Multi-point Control Unit) does not support a WebRTC protocol stack. FIG. 11 and FIG. 9 mainly have two differences which lie in that, firstly, the MCU and the media server (MS) are located at the same position but the MCU does not support a WebRTC protocol stack and is only used as a network element for media stream synthesis and presentation control; and secondly, a network element, i.e., an MG (Media Gateway) is introduced before the MCU.

A structure of the multi-point control unit is as illustrated in FIG. 16. Here, it should be specially illustrated that the multi-point control unit illustrated in FIG. 16 and the media server illustrated in FIG. 15 may be classified into the same type of network elements, and their core functions are media synthesis and presentation. Just for the sake of distinguishing, the embodiment of the present invention calls a media synthesis and presentation unit which does not support a WebRTC protocol stack as a multi-point control unit and calls a media synthesis and presentation unit which supports a WebRTC protocol stack as a media server. From FIG. 16, it can be seen that the multi-point control unit includes two core function entities, i.e., a media synthesis module and a media negotiation and media presentation control module. The media synthesis module is configured to perform sound mixing and frequency mixing processing on multiple real-time media streams sent by multiple WebRTC terminals to obtain one uniform media stream. The media negotiation and media presentation control module is configured to perform negotiation with media signaling from the application server, receive a media presentation policy of the application server (AS) and control the media synthesis module to process synthesis of multiple media streams according to a given policy.

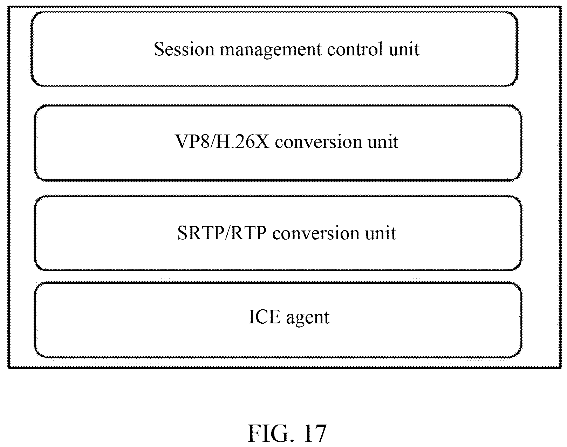

The main function of the MG (Media Gateway) is to adapt the media stream of the WebRTC terminal with the media stream of the multi-point control unit. A structure of the media gateway is as illustrated in FIG. 17. From FIG. 17, it can be seen that the media gateway includes four core modules, i.e., a session management control unit, a VP8/H.26X conversion unit, an SRTP/RTP conversion unit and an ICE agent. The session management unit is configured to coordinate the media negotiation between the WebRTC terminal and the multi-point control unit and enable the WebRTC terminal and the multi-point control unit to be mutually transparent on a media plane. The VP8/H.26X conversion unit is configured to complete mutual conversion between VP8 codes and H.26X codes to adapt to the difference in media codes of the WebRTC terminal and the multi-point control unit. The SRTP/RTP conversion unit is configured to complete mutual conversion between SRTP and RTP to adapt to the difference in media transmissions of the WebRTC terminal and the multi-point control unit. The ICE agent is configured to complete a check of connectivity between the media gateway and the WebRTC terminal to establish a media link between the both parties.

In FIG. 11, WebRTC terminals interact with the ICE server respectively to obtain local complete media plane SDP (Session Description Protocol) information (including audio and video coding and decoding, media encryption keys and algorithms, ICE candidate addresses, etc., referred as Offer for the sake of convenience in description), packages the information in an Internet signaling format such as ROAP (RTCWeb Offer/Answer Protocol) and JSON (JavaScript Object Notation), and sends the information to the application server through a transmission channel such as WebSocket or HTTP(s) long connection. The application server firstly judges whether the scenario is a two-party conversation scenario or a multi-party conference scenario according to the ROAP or JSON message.

When the application server judges that the scenario is a two-party conversation scenario, the application server directly forwards the ROAP or JSON message to a target WebRTC terminal and forwards an ROAP or JSON message including target WebRTC media negotiation information returned by the target WebRTC terminal to the calling WebRTC terminal. Thereafter, the calling WebRTC terminal and the called WebRTC terminal perform point-to-point communication according to a negotiated media link.

When the application server judges that the scenario is a multi-party conference scenario, the application server forwards the ROAP information or JSON information containing Offer information to the media gateway. The media gateway firstly takes out the Offer information, then locally saves a copy and then reconstructs the original Offer according to a mode adapted to the multi-point control unit to generate totally new media negotiation information Offer-MG which is returned to the application server. The application server sends the Offer-MG to the multi-point control unit to perform media negotiation and returns negotiated media information Answer-MCU to the application server, and the application server forwards the Answer-MCU to the media gateway. The media gateway locally saves an Answer-MCU copy, then performs reconstruction according to the above-mentioned Offer, generates media information Answer-MG adapted to the WebRTC terminal and returns the media information Answer-MG to the application server. The application server returns the Answer-MGs to the WebRTC terminal. Thereafter, the WebRTC terminals respectively perform a check of connectivity with the media gateway according to the candidate media connection information provided in the negotiation process and generate a respective media link. When the media stream of each WebRTC terminal arrives at the media gateway, the media gateway will perform media transmission and coding and decoding format conversion, and thereafter transmits the media stream to the multi-point control unit. The multi-point control unit performs sound mixing and frequency mixing processing of multi-party media streams according to the media control and presentation policy submitted by the application server, and returns the generated uniform media stream to the media gateway. The media gateway returns the generated uniform media stream to each party by using the media link between the media gateway and each WebRTC terminal. Thereby, each WebRTC only sends one media stream to the media gateway and receives one media stream sent by the media gateway such that mutual communication among multiple WebRTC terminals can be completed.

FIG. 12 illustrates an architecture diagram of a multi-party media processing system with a media relay under a situation that a multi-point control unit does not support a WebRTC protocol stack. The fundamental concept of FIG. 12 is consistent with the fundamental concept of FIG. 11, the network elements and the functions thereof in the system architecture are also the same. A major difference therebetween lies in that, in FIG. 12, a media relay address has to be selected to forward all media streams under a situation that neither the WebRTC terminal host address nor the outward public network address of the WebRTC terminal host can complete media link connection. Under this situation, the media stream of each WebRTC terminal is forwarded to the media gateway via the ICE server. Similarly, the synthesized media stream returned by the media gateway is also sent to each WebRTC terminal via the ICE server.

In order to more clearly describe the above-mentioned processes, the process of interaction between network elements will be described below in detail in combination with typical application examples.

### Application example 1

FIG. 18 illustrates a core flowchart of WebRTC adaptive media processing of first calling in a third party without a media relay under a situation that a media server supports a WebRTC protocol stack. The expression "first calling in" refers to that firstly a third-party WebRTC terminal accesses to an MS and then accesses to a chair WebRTC terminal. Major steps thereof are as follows.
1) A chair initiates a point-to-point real-time multimedia communication with a Participant 1.
   1.1.1) A chair WebRTC terminal interacts with an ICE server to obtain media plane information Offer-C such as local audio and video coding and decoding, media encryption algorithms and keys and candidate media connection addresses.
   1.1.2) The chair WebRTC terminal packages the above-mentioned media plane information Offer-C according to an ROAP or JSON format, and then sends the media plane information Offer-C to an application server by using WebSocket or HTTP(s) long connection between the chair WebRTC terminal and the application server.
   1.1.3) The application server forwards the Offer-C to the Participant 1 WebRTC terminal by using WebSocket or HTTP(s) long connection between the application server and the Participant 1 WebRTC terminal.
   1.1.4) The Participant 1 WebRTC terminal receives the Offer-C and initiates an interaction with the ICE server to obtain media plane information such as local audio and video coding and decoding, media encryption algorithms and keys and candidate media connection addresses.
   1.1.5) The Participant 1 WebRTC terminal completes media negotiation between the both parties according to the local media plane information and the Offer-C, generates negotiated media information Answer-P1, then packages the Answer-P1 according to an ROAP or JSON format and returns the Answer-P1 to the application server.
   1.1.6) The application server returns the Answer-P1 to the chair WebRTC terminal.
   1.1.7) The chair WebRTC terminal sends an acknowledged ROAP or JSON OK message to the application server.
   1.1.8) The application server forwards the OK message to the Participant 1 WebRTC terminal.
   1.1.9) The chair WebRTC terminal and the Participant 1 WebRTC terminal respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to establish a media link between the two ends by using a host address or a host outward public network address.
   1.1.10) The chair WebRTC terminal and the Participant 1 WebRTC terminal establish a point-to-point real-time multimedia communication by using a media link with the highest priority between the both parties.
2) The chair decides to add a Participant 2 to a discussion as needed. Therefore, the point-to-point real-time communication process becomes to a multi-party conference scenario. A core process thereof is as follows.
   1.2.1) The chair WebRTC terminal interacts with the ICE server to obtain media plane information Offer-C such as local audio and video coding and decoding, media encryption algorithms and keys and candidate media connection addresses.
   1.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the Participant 2 WebRTC terminal and a media server, and establishing a media channel between the both parties.
      1.2.3) The application server extracts information about the Participant 2 from the invite message in the step 1.2.2, and assembles an SIP INVITE from the Participant 2 to the media server, herein a message body of the invite does not carry any media information.
      1.2.4) The media server generates its media plane negotiation information Offer-MS according to a local media capability, packages the Offer-MS in an SIP 200 OK message to convert to return to the application server.
      1.2.5) The application server extracts the Offer-MS in the SIP 200 OK message, packages the Offer-MS according to an ROAP or JSON format and sends the Offer-MS to the Participant 2 WebRTC terminal.
      1.2.6) The Participant 2 WebRTC terminal receives the Offer-MS and initiates an interaction with the ICE server to obtain media plane information such as local audio and video coding and decoding, media encryption algorithms and keys and candidate media connection addresses.
      1.2.7) The Participant 2 WebRTC terminal completes media negotiation between the both parties according to the local media plane information and the Offer-MS, generates negotiated media information Answer-P2, then packages the Answer-P2 according to an ROAP or JSON format and returns the Answer-P2 to the application server.
      1.2.8) The application server returns an OK ACK message in an ROAP or JSON format to the Participant 2 WebRTC terminal.
      1.2.9) The application server converts the ROAP or JSON message containing the Answer-P2 into an SIP ACK message to the media server, herein the Answer-P2 is used as a message body and embedded into the SIP ACK message.
      1.2.10) The Participant 2 WebRTC terminal and the media server respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to establish a media link between the two ends by using a host address or a host outward public network address.
      1.2.11) The Participant 2 WebRTC terminal and the media server establish a media channel between the both parties by using a media link with the highest priority between the both parties.
   b) Completing media negotiation between the chair WebRTC terminal and the media server, and establishing a media channel between the both parties.
      1.3.1) The application server extracts the media plane information Offer-C of the chair WebRTC terminal from the invite message in the step 1.2.2, and assembles an SIP INVITE from the chair to the media server, herein a message body of the invite carries the Offer-C media information.
      1.3.2) The media server receives the SIP INVITE message, then generates media plane negotiation information Answer-MS according to a local media capability and the media negotiation information Offer-C of the chair WebRTC terminal, packages the Answer-MS in an SIP 200 OK message to convert to return to the application server.
      1.3.3) The application server extracts the Answer-MS in the SIP 200 OK message, packages the Answer-MS according to an ROAP or JSON format and sends the Answer-MS to the chair WebRTC terminal.
      1.3.4) The chair WebRTC terminal receives the Answer-MS and sends an acknowledged ROAP or JSON OK message to the application server.
      1.3.5) The application server converts the OK message into an SIP ACK message and sends the SIP ACK message to the media server for acknowledgement.
      1.3.6) The chair WebRTC terminal and the media server respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to establish a media link between the two ends by using a host address or a host outward public network address.
      1.3.7) The chair WebRTC terminal and the media server establish a point-to-point media channel between the both parties by using a media link with the highest priority between the both parties.
   c) Completing media negotiation between the Participant 1 WebRTC terminal and the media server, establishing a media channel between the both parties and shutting down a point-to-point media link between the Participant 1 WebRTC terminal and the chair WebRTC terminal.
      1.4.1) The application server sends an ROAP or JSON notification message of information for updating media to the Participant 1 WebRTC terminal.
      1.4.2) After the Participant 1 WebRTC terminal receives the notification message, the Participant 1 WebRTC terminal initiates an interaction with the ICE server to obtain media plane information Offer-P1 such as local audio and video coding and decoding, media encryption algorithms and keys and candidate media connection addresses.
      1.4.3) The Participant 1 WebRTC terminal packages the Offer-P1 according to an ROAP or JSON format and sends the Offer-P1 to the application server.
      1.4.4) The application server extracts the Offer-P1 and assembles an invite message SIP INVITE from the Participant 1 WebRTC terminal to the media server, herein the Offer-P1 is used as a message body of the invite message.
      1.4.5) The media server generates its media plane negotiation information Answer-MS according to a local media capability and the Offer-P1, packages the Answer-MS in an SIP 200 OK message to convert to return to the application server.
      1.4.6) The application server extracts the Answer-MS in the SIP 200 OK message, packages the Answer-MS according to an ROAP or JSON format and sends the Answer-MS to the Participant 1 WebRTC terminal.
      1.4.7) The Participant 1 WebRTC terminal receives the Answer-MS and returns an OK ACK message in an ROAP or JSON format to the application server.
      1.4.8) The application server converts the OK message into an SIP ACK message to the media server.
      1.4.9) The Participant 1 WebRTC terminal and the media server respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to establish a media link between the two ends by using a host address or a host outward public network address.
      1.4.10) The Participant 1 WebRTC terminal and the media server establish a media channel between the both parties by using a media link with the highest priority between the both parties.
      1.4.11) The Participant 1 WebRTC terminal sends a shutdown message in an ROAP or JSON format to the application server to request for shutting down the point-to-point media link between the Participant 1 and the chair.
      1.4.12) The application server forwards the shutdown message to the chair WebRTC terminal.
      1.4.13) The chair returns an acknowledged OK message in an ROAP or JSON format to the Participant WebRTC terminal and shuts down the local corresponding media link.
      1.4.14) After the Participant 1 WebRTC terminal receives the OK ACK message, the Participant 1 WebRTC terminal shuts down the local corresponding media link.
      1.4.15) The point-to-point media link between the Participant 1 and the chair is removed (Media connectivity remove).

   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.
   1.5.1) The application server sends an SIP INFO message containing a conference name to the media server and submits a request for establishing a conference on the media server.
   1.5.2) The media server establishes a conference according to the name and returns a 200 OK message to the application server. The message contains information about conference connection (connection msg) as a basis for the application server to submit a media synthesis and presentation policy in future. The information about conference connection includes conference name, conference connection information, etc.
   1.5.3) The application server extracts the conference name, the conference connection information and the current participant information, assembles multi-party media synthesis and presentation policy information corresponding to the conference to submit to the media server.
   1.5.4) The media server completes media stream synthesis of the multi-party conference according to the media synthesis and presentation policy submitted by the application server, and completes distribution of a synthesized media stream by using a media link between the media server and each WebRTC terminal. Thereafter, a 200 OK message is sent to the application server for acknowledgement.

Each WebRTC terminal which participates in the conference only sends one media stream to the media server.

Supposing that the number of WebRTC terminals which participate in the conference is n, the multi-party media synthesis and presentation policy, for example, may be set as that the media server synthesizes media streams of n WebRTC terminals which participate in the conference into one stream and then respectively sends the stream to each WebRTC terminal which participates in the conference. That is, each WebRTC terminal receives one media stream which includes media information of n WebRTC terminals. Or the multi-party media synthesis and presentation policy may be set as that the media server synthesizes media streams of n-1 WebRTC terminals which participate in the conference into one stream, and sends the stream to a WebRTC terminal with media information being removed. That is, a WebRTC terminal X receives one media stream which includes media information of other n-1 WebRTC terminals except the WebRTC terminal X itself.

### Application example 2

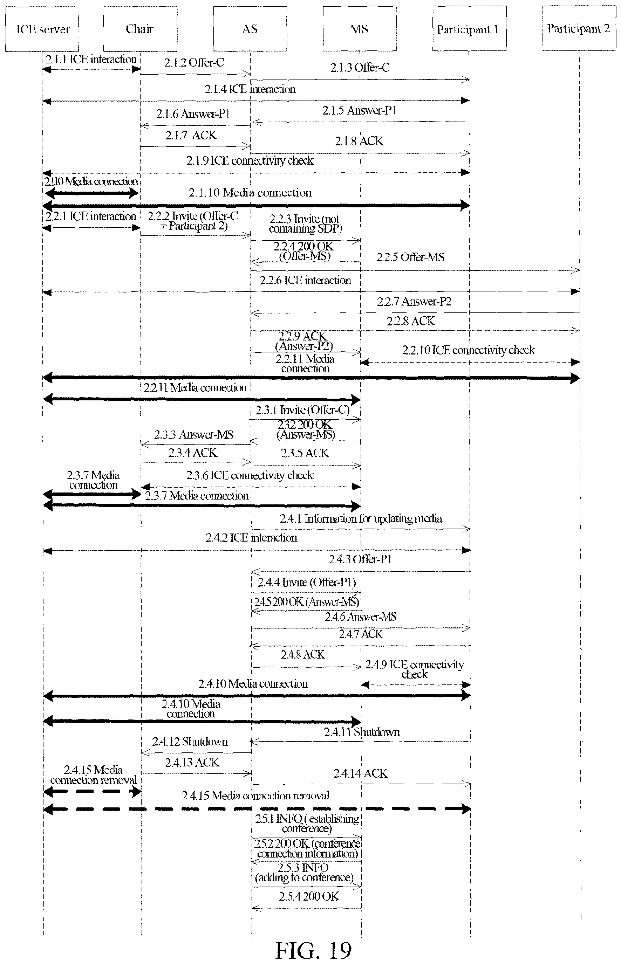

FIG. 19 illustrates a core flowchart of WebRTC adaptive media processing of first calling in a third party with a media relay under a situation that a media server supports a WebRTC protocol stack. Major steps thereof are as follows.
1) A chair initiates a real-time multimedia communication with a Participant 1.
   2.1.1) to 2.1.8) are substantially the same as 1.1.1) to 1.1.8) in FIG. 18. In order to save the space, no repetitive description is made here.
   2.1.9) The chair WebRTC terminal and the Participant 1 WebRTC terminal respectively and sequentially perform a connectivity check according to the candidate media connection addresses exchanged in the media negotiation process, and find that only the media relay address can complete establishment of a media link between the two ends.
   2.1.10) The chair WebRTC terminal and the Participant 1 WebRTC terminal establish a real-time multimedia communication by using an ICE relay server between the both parties.
2) The chair decides to add a Participant 2 to a discussion as needed. Therefore, the point-to-point real-time communication process becomes to a multi-party conference scenario. A core process thereof is as follows.
   2.2.1) The chair WebRTC terminal interacts with the ICE server to obtain media plane information Offer-C such as local audio and video coding and decoding, media encryption algorithms and keys and candidate media connection addresses.
   2.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the Participant 2 WebRTC terminal and a media server, and establishing a media channel between the both parties.
      For 2.2.3) to 2.2.9), a reference may be made to 1.2.3) to 1.2.9) in FIG. 18, and thus no repetitive description is made here.
      2.2.10) The Participant 2 WebRTC terminal and the media server respectively and sequentially perform a connectivity check according to the candidate media connection addresses exchanged in the media negotiation process, and find that only the media relay address can complete establishment of a media link between the two ends.
      2.2.11) The Participant 2 WebRTC terminal and the media server establish a media channel between the both parties by using an ICE relay server between the both parties.
   b) Completing media negotiation between the chair WebRTC terminal and the media server, and establishing a media channel between the both parties.
      For 2.3.1) to 2.3.5), a reference may be made to 1.3.1) to 1.3.5) in FIG. 18, and thus no repetitive description is made here.
      2.3.6) The chair WebRTC terminal and the media server respectively and sequentially perform a connectivity check according to the candidate media connection addresses exchanged in the media negotiation process, and find that only the media relay address can complete establishment of a media link between the two ends.
   c) The chair WebRTC terminal and the media server establish a media channel between the both parties by using an ICE relay server between the both parties.
      For 2.4.1) to 2.4.8), a reference may be made to 1.4.1) to 1.4.8) in FIG. 18, and thus no repetitive description is made here.
      2.4.9) The Participant 1 WebRTC terminal and the media server respectively and sequentially perform a connectivity check according to the candidate media connection addresses exchanged in the media negotiation process, and find that only the media relay address can complete establishment of a media link between the two ends.
      2.4.10) The Participant 1 WebRTC terminal and the media server establish a media channel between the both parties by using an ICE relay server between the both parties.
      For 2.4.11) to 2.4.15), a reference may be made to 1.4.11) to 1.4.15) in FIG. 18, and thus no repetitive description is made here.

   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.
   For 2.5.1) to 2.5.4), a reference may be made to 1.5.1) to 1.5.4) in FIG. 18, and thus no repetitive description is made here.

### Application example 3

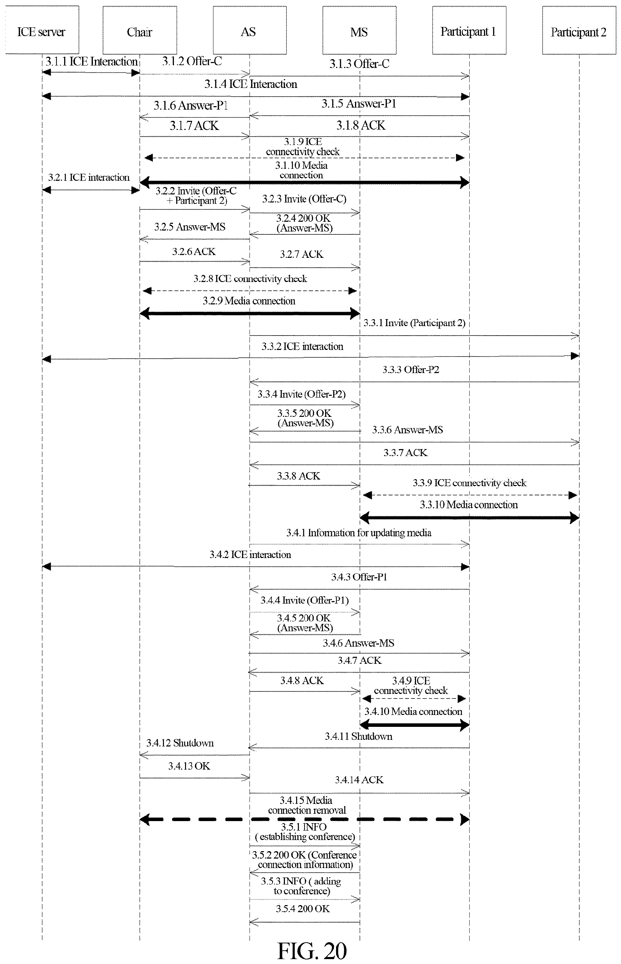

FIG. 20 illustrates a core flowchart of WebRTC adaptive media processing of later calling in a third party without a media relay under a situation that a media server supports a WebRTC protocol stack. The expression "later calling in" refers to that firstly a chair WebRTC terminal accesses to an MS and then accesses to a third-party WebRTC terminal. Major steps thereof are as follows.
1) A chair initiates a point-to-point real-time multimedia communication with a Participant 1.
   For 3.1.1) to 3.1.10), a reference may be made to 1.1.1) to 1.1.10) in FIG. 18, and thus no repetitive description is made here.
2) The chair decides to add a Participant 2 to a discussion as needed. Therefore, the point-to-point real-time communication process becomes to a multi-party conference scenario. A core process thereof is as follows.
   3.2.1) The chair WebRTC terminal interacts with the ICE server to obtain media plane information Offer-C such as local audio and video coding and decoding, media encryption algorithms and keys and candidate media connection addresses.
   3.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the chair WebRTC terminal and a media server, and establishing a media channel between the both parties.
      3.2.3) The application server extracts the media plane information Offer-C of the chair WebRTC from the invite message in the step 3.2.2, and assembles an SIP INVITE from the chair to the media server, herein a message body of the invite carries the Offer-C media information.
      For 3.2.4) to 3.2.9), a reference may be made to 1.3.2) to 1.3.7) in FIG. 18, and thus no repetitive description is made here.
   b) Completing media negotiation between the Participant 2 WebRTC terminal and the media server, and establishing a media channel between the both parties.
      3.3.1) The application server extracts information about the Participant 2 from the invite message in the step 3.2.2, and assembles an invite message in an ROAP or JSON format to the Participant 2 WebRTC terminal to invite the Participant 2 to join in the multi-party communication.
      3.3.2) The Participant 2 WebRTC terminal initiates an interaction with the ICE server to obtain media plane information Offer-P2 such as local audio and video coding and decoding, media encryption algorithms and keys and candidate media connection addresses.
      3.3.3) The Participant 2 WebRTC terminal packages the Offer-P2 according to an ROAP or JSON format and then sends the Offer-P2 to the application server.
      3.3.4) The application server extracts the Offer-P2 and assembles an invite message SIP INVITE from the Participant 2 WebRTC terminal to the media server, herein the Offer-P2 is used as a message body of the invite message.
      3.3.5) The media server generates its media plane negotiation information Answer-MS according to a local media capability and the Offer-P2, packages the Answer-MS in an SIP 200 OK message to convert to return to the application server.
      3.3.6) The application server extracts the Offer-MS in the SIP 200 OK message, packages the Answer-MS according to an ROAP or JSON format to send to the Participant 2 WebRTC terminal.
      3.3.7) The Participant 2 WebRTC terminal receives the Answer-MS and returns an OK ACK message in an ROAP or JSON format to the application server.
      3.3.8) The application server converts the OK message into an SIP ACK message to the media server.
      3.3.9) The Participant 2 WebRTC terminal and the media server respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to establish a media link between the two ends by using a host address or a host outward public network address.
      3.3.10) The Participant 1 WebRTC terminal and the media server establish a media channel between the both parties by using a media link with the highest priority between the both parties.
   c) Completing media negotiation between the Participant 1 WebRTC terminal and the media server, establishing a media channel between the both parties and shutting down a point-to-point media link between the Participant 1 WebRTC terminal and the chair WebRTC terminal:
      For 3.4.1) to 3.4.15), a reference may be made to 1.4.1) to 1.4.15) in FIG. 18, and thus no repetitive description is made here.

      Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.

For 3.5.1) to 3.5.4), a reference may be made to 1.5.1) to 1.5.4) in FIG. 18, and thus no repetitive description is made here.

### Application example 4

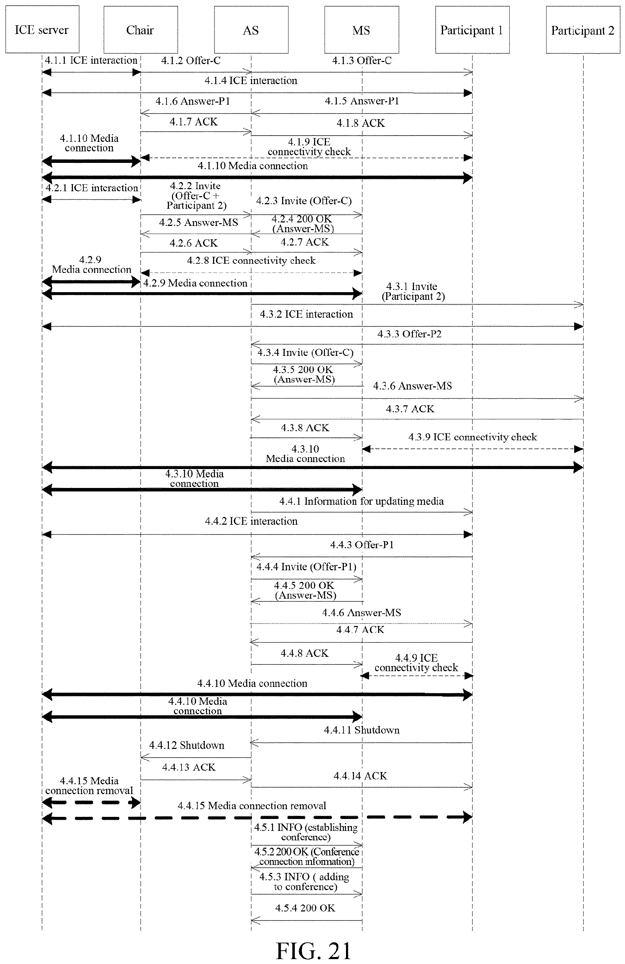

FIG. 21 illustrates a core flowchart of WebRTC adaptive media processing of later calling in a third party with a media relay under a situation that a media server supports a WebRTC protocol stack. Major steps thereof are as follows.
1) A chair initiates a point-to-point real-time multimedia communication with a Participant 1.
   4.1.1) to 4.1.8) are substantially the same as 1.1.1) to 1.1.8) in FIG. 18. In order to save the space, no repetitive description is made here.
   4.1.9) The chair WebRTC terminal and the Participant 1 WebRTC terminal respectively and sequentially perform a connectivity check according to the candidate media connection addresses exchanged in the media negotiation process, and find that only the media relay address can complete establishment of a media link between the two ends.
   4.1.10) The chair WebRTC terminal and the Participant 1 WebRTC terminal establish a real-time multimedia communication by using an ICE relay server between the both parties.
2) The chair decides to add a Participant 2 to a discussion as needed. Therefore, the point-to-point real-time communication process becomes to a multi-party conference scenario. A core process thereof is as follows.
   4.2.1) The chair WebRTC terminal interacts with the ICE server to obtain media plane information Offer-C such as local audio and video coding and decoding, media encryption algorithms and keys and candidate media connection addresses.
   4.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the chair WebRTC terminal and a media server, and establishing a media channel between the both parties.
      For 4.2.3) to 4.2.7), a reference may be made to 3.2.3) to 3.2.7) in FIG. 20. In order to save the space, no repetitive description is made here.
      4.2.8) The chair WebRTC terminal and the media server respectively and sequentially perform a connectivity check according to the candidate media connection addresses exchanged in the media negotiation process, and find that only the media relay address can complete establishment of a media link between the two ends.
      4.2.9) The chair WebRTC terminal and the media server establish a media channel between the both parties by using an ICE relay server between the both parties.
   b) Completing media negotiation between the Participant 2 WebRTC terminal and the media server, and establishing a media channel between the both parties.
      For 4.3.1) to 4.3.8), a reference may be made to 3.3.1) to 3.3.8) in FIG. 20, and thus no repetitive description is made here.
      4.3.9) The participant 2 WebRTC terminal and the media server respectively and sequentially perform a connectivity check according to the candidate media connection addresses exchanged in the media negotiation process, and find that only the media relay address can complete establishment of a media link between the two ends.
      4.3.10) The participant 1 WebRTC terminal and the media server establish a media channel between the both parties by using an ICE relay server between the both parties.
   c) Completing media negotiation between the Participant 1 WebRTC terminal and the media server, establishing a media channel between the both parties and shutting down a point-to-point media link between the Participant 1 WebRTC terminal and the chair WebRTC terminal.
      For 4.4.1) to 4.4.8), a reference may be made to 3.4.1) to 3.4.8) in FIG. 20, and thus no repetitive description is made here.
      4.4.9) The Participant 1 WebRTC terminal and the media server respectively and sequentially perform a connectivity check according to the candidate media connection addresses exchanged in the media negotiation process, and find that only the media relay address can complete establishment of a media link between the two ends.
      4.4.10) The Participant 1 WebRTC terminal and the media server establish a media channel between the both parties by using an ICE relay server between the both parties.
      For 4.4.11) to 4.4.14), a reference may be made to 4.4.11) to 4.4.14) in FIG. 18, and thus no repetitive description is made here.
         Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.
For 4.5.1) to 4.5.4), a reference may be made to 1.5.1) to 1.5.4) in FIG. 18, and thus no repetitive description is made here.

### Application example 5

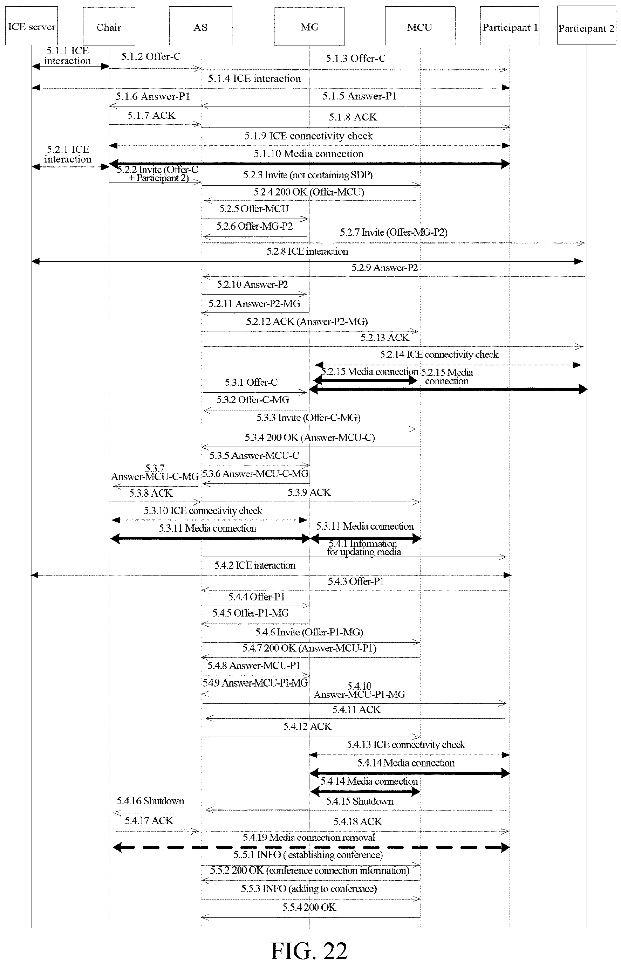

FIG. 22 illustrates a core flowchart of WebRTC adaptive media processing of first calling in a third party without a media relay under a situation that a multi-point control unit does not support a WebRTC protocol stack. Major steps thereof are as follows.
1) A chair initiates a real-time multimedia communication with a Participant 1.
   For 5.1.1) to 5.1.10), a reference may be made to 1.1.1) to 1.1.10) in FIG. 18, and thus no repetitive description is made here.
2) The chair decides to add a Participant 2 to a discussion as needed. Therefore, the point-to-point real-time communication process becomes to a multi-party conference scenario. A core process thereof is as follows.
   5.2.1) The chair WebRTC terminal interacts with the ICE server to obtain media plane information Offer-C such as local audio and video coding and decoding, media encryption algorithms and keys and candidate media connection addresses.
   5.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the Participant 2 WebRTC terminal and a multi-point control unit, and establishing a media channel between the both parties.
      5.2.3) The application server extracts information about the Participant 2 from the invite message in the step 5.2.2, and assembles an SIP INVITE from the Participant 2 to the media server, herein a message body of the invite does not carry any media information.
      5.2.4) The multi-point control unit generates its media plane negotiation information Offer-MCU according to a local media capability, packages the Offer-MCU in an SIP 200 OK message to return to the application server.
      5.2.5) The application server extracts the Offer-MCU in the SIP 200 OK message, packages the Offer-MCU according to an ROAP or JSON format and sends the Offer-MCU to a media gateway.
      5.2.6) The media gateway extracts the Offer-MCU in the ROAP or JSON message, firstly, locally saves a copy of the Offer-MCU, modifies audio and video coding and decoding information in the original Offer-MCU into a format which can be recognized by the WebRTC terminal, adds media stream encryption key and encryption algorithm information, and modifies media connection addresses to local candidate media connection addresses, then generates totally new media negotiation information Offer-MG-P2 and returns the media negotiation information Offer-MG-P2 to the application server.
      5.2.7) The application server packages the Offer-MG-P2 according to an ROAP or JSON format and forwards the Offer-MG-P2 to the Participant 2 WebRTC terminal.
      5.2.8) The Participant 2 WebRTC terminal receives the Offer-MG-P2 and initiates an interaction with the ICE server to obtain media plane information such as local audio and video coding and decoding, media encryption algorithms and keys and candidate media connection addresses.
      5.2.9) The Participant 2 WebRTC terminal completes media negotiation between the Participant 2 WebRTC terminal and the media gateway according to the local media plane information and the Offer-MG-P2, generates negotiated media information Answer-P2, then packages the Answer-P2 according to an ROAP or JSON format and returns the Answer-P2 to the application server.
      5.2.10) The application server forwards the Answer-P2 message in an ROAP or JSON format to the media gateway.
      5.2.11) The media gateway extracts the Answer-P2 in the ROAP or JSON message, firstly, locally saves a copy of the Answer-P2, modifies audio and video coding and decoding information in the original Answer-P2 into a format which can be recognized by the multi-point control unit, deletes media stream encryption key and encryption algorithm information, and modifies media connection addresses to local candidate media connection addresses, then generates totally new media negotiation information Answer-P2-MG and returns the totally new media negotiation information Answer-P2-MG to the application server.
      5.2.12) The application server converts the ROAP or JSON message containing the Answer-P2-MG into an SIP ACK message to send to the multi-point control unit, herein the Answer-P2-MG is used as a message body and embedded into the SIP ACK message.
      5.2.13) The application server sends an OK message in an ROAP or JSON format to the Participant WebRTC terminal for acknowledgement.
      5.2.14) The Participant 2 WebRTC terminal and the multi-point control unit respectively and sequentially perform a connectivity check according to the candidate media connection addresses exchanged in the media negotiation process, and complete establishment of media links between the Participant 2 WebRTC terminal and the media gateway and between the multi-point control unit and the media gateway according to priorities from high to low.
      5.2.15) The Participant 2 WebRTC terminal and the multi-point control unit respectively establish communications by using a media link between each of the Participant 2 WebRTC terminal and the multi-point control unit and the media gateway.
   b) Completing media negotiation between the chair WebRTC terminal and the media server, and establishing a media channel between the both parties.
      5.3.1) The application server extracts the media plane information Offer-C of the chair WebRTC terminal from the invite message in the step 5.2.2, packages the Offer-C in an ROAP or JSON format and sends the Offer-C to the media gateway.
      5.3.2) The media gateway extracts the Offer-C in the ROAP or JSON message, firstly, locally saves a copy of the Offer-C, modifies audio and video coding and decoding information in the original Offer-C into a format which can be recognized by the multi-point control unit, deletes media stream encryption key and encryption algorithm information, and modifies media connection addresses to local candidate media connection addresses of the media gateway, then generates totally new media negotiation information Offer-C-MG and returns the totally new media negotiation information Offer-C-MG to the application server.
      5.3.3) The application server uses the Offer-C-MG as a message body of an SIP INVITE message to send to the multi-point control unit.
      5.3.4) The multi-point control unit generates media negotiation information Answer-MCU-C according to the Offer-C-MG and the local media capability, packages the Answer-MCU-C into an SIP 200 OK message to return to the application server.
      5.3.5) The application server extracts the Answer-MCU-C in the SIP 200 OK message, packages the Answer-MCU-C in an ROAP or JSON format and sends the Answer-MCU-C to the media gateway.
      5.3.6) The media gateway firstly, locally saves a copy of the Answer-MCU-C as a basis for communication with the media gateway in future, then modifies audio and video coding and decoding information in the original Answer-MCU-C into a format which can be recognized by the WebRTC terminal, adds information adapted to the media stream encryption key and encryption algorithm in the Offer-C, and modifies media connection addresses to local candidate media connection addresses of the media gateway, then generates totally new media negotiation information Answer-MCU-C-MG and returns the totally new media negotiation information Answer-MCU-C-MG to the application server.
      5.3.7) The application server packages the Answer-MCU-C-MG according to an ROAP or JSON format and forwards the Answer-MCU-C-MG to the chair WebRTC terminal.
      5.3.8) The chair WebRTC terminal sends an OK ACK message in an ROAP or JSON format to the application server.
      5.3.9) The application server converts the OK ACK message into an SIP ACK message to send to the multi-point control unit.
      5.3.10) The chair WebRTC terminal and the media gateway respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to complete establishment of a media link between the two ends by using a host address or a host outward public network address.
      5.3.11) The Participant 1 WebRTC terminal and the media gateway establish a media channel between the both parties by using a media link with the highest priority between the both parties, and the media gateway and the multi-point control unit establish a media channel between the both parties according to a media connection address in the negotiation process.
   c) Completing media negotiation between the Participant 1 WebRTC terminal and the media server, establishing a media channel between the both parties and shutting down a media link between the Participant 1 WebRTC terminal and the chair WebRTC terminal.
      5.4.1) The application server sends an ROAP or JSON notification message of information for updating media to the Participant 1 WebRTC terminal.
      5.4.2) After the Participant 1 WebRTC terminal receives the notification message, the Participant 1 WebRTC terminal initiates an interaction with the ICE server to obtain media plane information Offer-P1 such as local audio and video coding and decoding, media encryption algorithms and keys and candidate media connection addresses.
      5.4.3) The Participant 1 WebRTC terminal packages the Offer-P1 according to an ROAP or JSON format and sends the Offer-P1 to the application server.
      5.4.4) The application server forwards the Offer-P1 in the ROAP or JSON format to the media gateway.
      5.4.5) The media gateway extracts the Offer-P1 in the ROAP or JSON message, firstly, locally saves a copy of the Offer-P1, then modifies audio and video coding and decoding information in the original Offer-P1 to a format which can be recognized by the multi-point control unit, deletes media stream encryption key and encryption algorithm information, and modifies media connection addresses to local candidate media connection addresses of the media gateway, then generates totally new media negotiation information Offer-P1-MG and returns the totally new media negotiation information Offer-P1-MG to the application server.
      5.4.6) The application server uses the Offer-P1-MG as a message body of an SIP INVITE message to send to the multi-point control unit.
      5.4.7) The multi-point control unit generates media negotiation information Answer-MCU-P1 according to the Offer-P1-MG and the local media capability, packages the Answer-MCU-P1 into an SIP 200 OK message to return to the application server.
      5.4.8) The application server extracts the Answer-MCU-P1 in the SIP 200 OK message, packages the Answer-MCU-P1 in an ROAP or JSON format and sends the Answer-MCU-P1 to the media gateway.
      5.4.9) The media gateway firstly, locally saves a copy of the Answer-MCU-P1 as a basis for communication with the media gateway in future, then modifies audio and video coding and decoding information in the original Answer-MCU-P1 into a format adapted to the copy of the Offer-P1, adds information adapted to the media stream encryption key and encryption algorithm in the Offer-C, and modifies media connection addresses to local candidate media connection addresses of the media gateway, then generates totally new media negotiation information Answer-MCU-P1-MG and returns the totally new media negotiation information Answer-MCU-P1-MG to the application server.
      5.4.10) The application server packages the Answer-MCU-P1-MG according to an ROAP or JSON format and then sends the Answer-MCU-P1-MG to the Participant 1 WebRTC terminal.
      5.4.11) The Participant 1 WebRTC terminal sends an OK ACK message in an ROAP or JSON format to the application server.
      5.4.12) The application server converts the OK ACK message into an SIP ACK message to send to the multi-point control unit.
      5.4.13) The Participant 1 WebRTC terminal and the media gateway respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to complete establishment of a media link between the two ends by using a host address or a host outward public network address.
      5.4.14) The Participant 1 WebRTC terminal and the media gateway establish a media channel between the both parties by using a media link with the highest priority between the both parties. The media gateway and the multi-point control unit establish a media channel between the both parties according to a media connection address in the negotiation process.
      For 5.4.15) to 5.4.19), a reference may be made to 1.4.11) to 1.4.15) in FIG. 18, and thus no repetitive description is made here.

   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.

For 5.5.1) to 5.5.4), a reference may be made to 1.5.1) to 1.5.4) in FIG. 18, and thus no repetitive description is made here.

### Application example 6

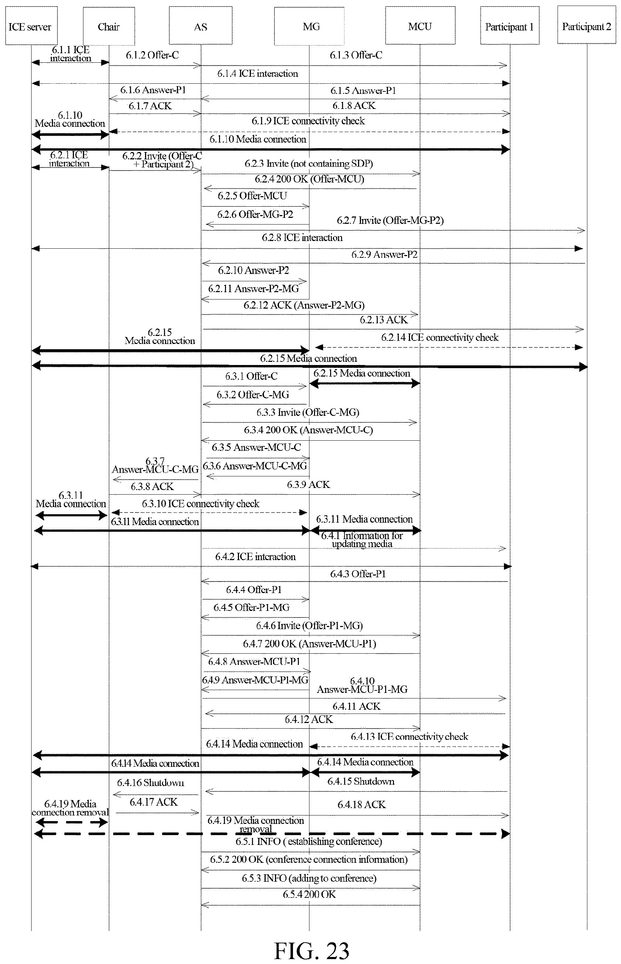

FIG. 23 illustrates a core flowchart of WebRTC adaptive media processing of first calling in a third party with a media relay under a situation that a multi-point control unit does not support a WebRTC protocol stack. Major steps thereof are as follows.
1) A chair initiates a real-time multimedia communication with a Participant 1.
   For 6.1.1) to 6.1.8), a reference may be made to 1.1.1) to 1.1.10) in FIG. 18, and thus no repetitive description is made here.
   6.1.9) The chair WebRTC terminal and the Participant 1 WebRTC terminal respectively and sequentially perform a connectivity check according to the candidate media connection addresses exchanged in the media negotiation process, and find that only the media relay address can complete establishment of a media link between the two ends.
   6.1.10) The chair WebRTC terminal and the Participant 1 WebRTC terminal establish a real-time multimedia communication by using an ICE relay server between the both parties.
2) The chair decides to add a Participant 2 to a discussion as needed. Therefore, the point-to-point real-time communication process becomes to a multi-party conference scenario. A core process thereof is as follows.
   6.2.1) The chair WebRTC terminal interacts with the ICE server to obtain media plane information Offer-C such as local audio and video coding and decoding, media encryption algorithms and keys and candidate media connection addresses.
   6.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the Participant 2 WebRTC terminal and a multi-point control unit, and establishing a media channel between the both parties:
      For 6.2.3) to 6.2.13), a reference may be made to 5.2.3) to 5.2.13) in FIG. 22, and thus no repetitive description is made here.
      6.2.14) The Participant 2 WebRTC terminal and the multi-point control unit respectively and sequentially perform a connectivity check according to the candidate media connection addresses exchanged in the media negotiation process, and find that a media link can be established between the WebRTC terminal and the media gateway only through an ICE relay server.
      6.2.15) The Participant 2 WebRTC terminal and the multi-point control unit respectively establish communications by using a media link between each of the Participant 2 WebRTC terminal and the multi-point control unit and the media gateway.
   b) Completing media negotiation between the chair WebRTC terminal and the mufti-point control unit, and establishing a media channel between the both parties.
      For 6.3.1) to 6.3.9), a reference may be made to 5.3.1) to 5.3.9) in FIG. 22, and thus no repetitive description is made here.
      6.3.10) The chair WebRTC terminal and the multi-point control unit respectively and sequentially perform a connectivity check according to the candidate media connection addresses exchanged in the media negotiation process, and find that a media link can be established between the chair WebRTC terminal and the media gateway only through an ICE relay server.
      6.3.11) The chair WebRTC terminal and the multi-point control unit respectively establish communications by using a media links between each of the chair WebRTC terminal and the multi-point control unit and the media gateway.
   c) Completing media negotiation between the Participant 1 WebRTC terminal and the multi-point control unit, establishing a media channel between the both parties and shutting down a media link between the Participant 1 WebRTC terminal and the chair WebRTC terminal.
      For 6.4.1) to 6.4.12), a reference may be made to 5.4.1) to 5.4.12) in FIG. 22, and thus no repetitive description is made here.
      6.4.13) The Participant 1 WebRTC terminal and the multi-point control unit respectively and sequentially perform a connectivity check according to the candidate media connection addresses exchanged in the media negotiation process, and find that a media link can be established between the Participant 1 WebRTC terminal and the media gateway only through an ICE relay server.
      6.4.14) The chair WebRTC terminal and the multi-point control unit respectively establish communications by using a media link between each of the chair WebRTC terminal and the multi-point control unit and the media gateway.
      For 6.4.15) to 6.4.19), a reference may be made to 1.4.11) to 1.4.15) in FIG. 18, and thus no repetitive description is made here.
   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.

For 6.5.1) to 6.5.4), a reference may be made to 1.5.1) to 1.5.4) in FIG. 18, and thus no repetitive description is made here.

### Application example 7

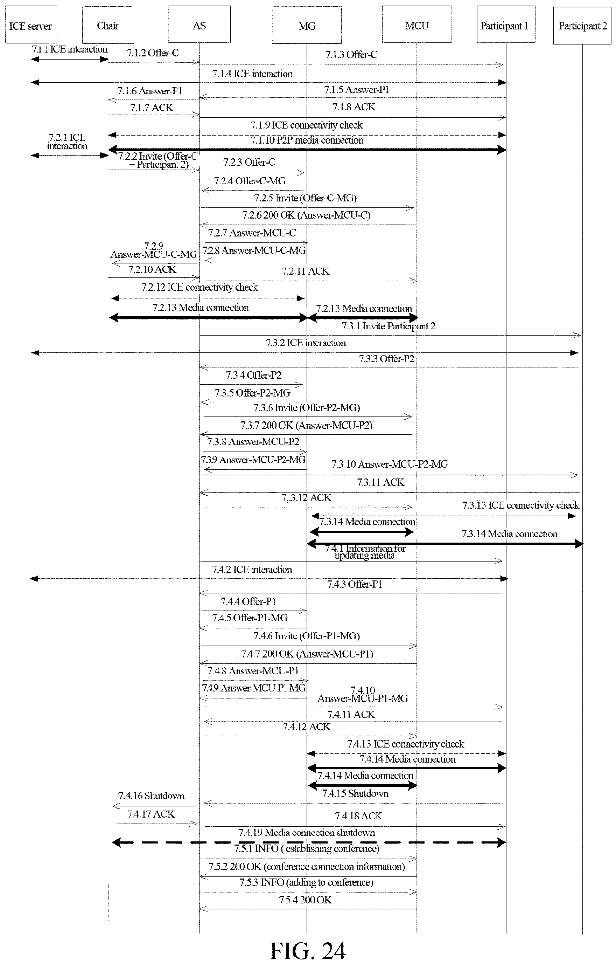

FIG. 24 illustrates a core flowchart of WebRTC adaptive media processing of later calling in a third party without a media relay under a situation that a multi-point control unit does not support a WebRTC protocol stack. Major steps thereof are as follows.
1) A chair initiates a real-time multimedia communication with a Participant 1.
   For 7.1.1) to 7.1.10), a reference may be made to 1.1.1) to 1.1.10) in FIG. 18, and thus no repetitive description is made here.
2) The chair decides to add a Participant 2 to a discussion as needed. Therefore, the point-to-point real-time communication process becomes to a multi-party conference scenario. A core process thereof is as follows.
   7.2.1) The chair WebRTC terminal interacts with the ICE server to obtain media plane information Offer-C such as local audio and video coding and decoding, media encryption algorithms and keys and candidate media connection addresses.
   7.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the chair WebRTC terminal and a multi-point control unit, and establishing a media channel between the both parties.
      7.2.3) The application server extracts the media plane information Offer-C of the chair WebRTC terminal from the invite message in the step 7.2.2, packages the Offer-C in an ROAP or JSON format and sends the Offer-C to the media gateway.
      7.2.4) The media gateway extracts the Offer-C in the ROAP or JSON message, firstly, locally saves a copy of the Offer-C, modifies audio and video coding and decoding information in the original Offer-C into a format which is can be recognized by the multi-point control unit, deletes media stream encryption key and encryption algorithm information, and modifies media connection addresses to local candidate media connection addresses of the media gateway, then generates totally new media negotiation information Offer-C-MG and returns the totally new media negotiation information Offer-C-MG to the application server.
      7.2.5) The application server uses the Offer-C-MG as a message body of an SIP INVITE message to send to the multi-point control unit.
      7.2.6) The multi-point control unit generates media negotiation information Answer-MCU-C according to the Offer-C-MG and the local media capability, packages the Answer-MCU-C into an SIP 200 OK message to return to the application server.
      7.2.7) The application server extracts the Answer-MCU-C in the SIP 200 OK message, packages the Answer-MCU-C in an ROAP or JSON format and sends the Answer-MCU-C to the media gateway.
      7.2.8) The media gateway firstly, locally saves a copy of the Answer-MCU-C as a basis for communication with the media gateway in future, then modifies audio and video coding and decoding information in the original Answer-MCU-C into a format which can be recognized by the WebRTC terminal, adds information adapted to the media stream encryption key and encryption algorithm in the Offer-C, and modifies media connection addresses to local candidate media connection addresses of the media gateway, then generates totally new media negotiation information Answer-MCU-C-MG and returns the totally new media negotiation information Answer-MCU-C-MG to the application server.
      7.2.9) The application server packages the Answer-MCU-C-MG according to an ROAP or JSON format and forwards the Answer-MCU-C-MG to the chair WebRTC terminal.
      7.2.10) The chair WebRTC terminal sends an OK ACK message in an ROAP or JSON format to the application server.
      7.2.11) The application server converts the OK ACK message into an SIP ACK message to send to the multi-point control unit.
      7.2.12) The chair WebRTC terminal and the media gateway respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to complete establishment of a media link between the two ends by using a host address or a host outward public network address.
      7.2.13) The Participant 1 WebRTC terminal and the multi-point control unit establish a media channel between the both parties by using a media link with the highest priority between the both parties, and the media gateway and the multi-point control unit establish a media channel between the both parties according to a media connection address in the negotiation process.
   b) Completing media negotiation between the Participant 2 WebRTC terminal and the multi-point control unit, and establishing a media channel between the both parties.
      7.3.1) The application server extracts the information about the Participant 2 from the invite message submitted by the chair, assembles an invite message in an ROAP or JSON format and provides the invite message to the Participant 2.
      7.3.2) After the Participant 2 WebRTC terminal receives the invite message, the Participant 2 WebRTC terminal initiates an interaction with the ICE server to obtain media plane information Offer-P2 such as local audio and video coding and decoding, media encryption algorithms and keys and candidate media connection addresses.
      7.3.3) The Participant 2 WebRTC terminal packages the Offer-P2 according to an ROAP or JSON format and sends the Offer-P2 to the application server.
      7.3.4) The application server forwards the Offer-P2 in the ROAP or JSON format to the media gateway.
      7.3.5) The media gateway extracts the Offer-P2 in the ROAP or JSON message, firstly, locally saves a copy of the Offer-P2, then modifies audio and video coding and decoding information in the original Offer-P2 to a format which can be recognized by the multi-point control unit, deletes media stream encryption key and encryption algorithm information, and modifies media connection addresses to local candidate media connection addresses of the media gateway, then generates totally new media negotiation information Offer-P2-MG and returns the totally new media negotiation information Offer-P2-MG to the application server.
      7.3.6) The application server uses the Offer-P2-MG as a message body of an SIP INVITE message to send to the multi-point control unit.
      7.3.7) The multi-point control unit generates media negotiation information Answer-MCU-P2 according to the Offer-P2-MG and the local media capability, packages the Answer-MCU-P2 into an SIP 200 OK message to return to the application server.
      7.3.8) The application server extracts the Answer-MCU-P2 in the SIP 200 OK message, packages the Answer-MCU-P2 in an ROAP or JSON format and sends the Answer-MCU-P2 to the media gateway.
      7.3.9) The media gateway firstly, locally saves a copy of the Answer-MCU-P2 as a basis for communication with the media gateway in future, then modifies audio and video coding and decoding information in the original Answer-MCU-P2 into a format adapted to the copy of the Offer-P2, adds information adapted to the media stream encryption key and encryption algorithm in the Offer-P2, and modifies media connection addresses to local candidate media connection addresses of the media gateway, then generates totally new media negotiation information Answer-MCU-P2-MG and returns the totally new media negotiation information Answer-MCU-P2-MG to the application server.
      7.3.10) The application server packages the Answer-MCU-P2-MG according to an ROAP or JSON format and then sends the Answer-MCU-P2-MG to the Participant 2 WebRTC terminal.
      7.3.11) The Participant 2 WebRTC terminal sends an OK ACK message in an ROAP or JSON format to the application server.
      7.3.12) The application server converts the OK ACK message into an SIP ACK message to send to the multi-point control unit.
      7.3.13) The Participant 2 WebRTC terminal and the media gateway respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to complete establishment of a media link between the two ends by using a host address or a host outward public network address.
      7.3.14) The Participant 2 WebRTC terminal and the multi-point control unit establish a media channel between the both parties by using a media link with the highest priority between the both parties, and the media gateway and the multi-point control unit establish a media channel between the both parties according to a media connection address in the negotiation process.
   c) Completing media negotiation between the Participant 1 WebRTC terminal and the media server, establishing a media channel between the both parties and shutting down a point-to-point media link between the Participant 1 WebRTC terminal and the chair WebRTC terminal.
      7.4.1) The application server sends an ROAP or JSON notification message of information for updating media to the Participant 1 WebRTC terminal.
      7.4.2) After the Participant 1 WebRTC terminal receives the notification message, the Participant 1 WebRTC terminal initiates an interaction with the ICE server to obtain media plane information Offer-P1 such as local audio and video coding and decoding, media encryption algorithms and keys and candidate media connection addresses.
      7.4.3) The Participant 1 WebRTC terminal packages the Offer-P1 according to an ROAP or JSON format and sends the Offer-P1 to the application server.
      7.4.4) The application server forwards the Offer-P1 in the ROAP or JSON format to the media gateway.
      7.4.5) The media gateway extracts the Offer-P1 in the ROAP or JSON message, firstly, locally saves a copy of the Offer-P1, then modifies audio and video coding and decoding information in the original Offer-P1 to a format which can be recognized by the multi-point control unit, deletes media stream encryption key and encryption algorithm information, and modifies media connection addresses to local candidate media connection addresses of the media gateway, then generates totally new media negotiation information Offer-P1-MG and returns the totally new media negotiation information Offer-P1-MG to the application server.
      7.4.6) The application server uses the Offer-P1-MG as a message body of an SIP INVITE message to send to the multi-point control unit.
      7.4.7) The multi-point control unit generates media negotiation information Answer-MCU-P1 according to the Offer-P1-MG and the local media capability, packages the Answer-MCU-P1 into an SIP 200 OK message to return to the application server.
      7.4.8) The application server extracts the Answer-MCU-P1 in the SIP 200 OK message, packages the Answer-MCU-P1 in an ROAP or JSON format and sends the Answer-MCU-P1 to the media gateway.
      7.4.9) The media gateway firstly, locally saves a copy of the Answer-MCU-P1 as a basis for communication with the media gateway in future, then modifies audio and video coding and decoding information in the original Answer-MCU-P1 into a format adapted to the copy of the Offer-P1, adds information adapted to the media stream encryption key and encryption algorithm in the Offer-C, and modifies media connection addresses to local candidate media connection addresses of the media gateway, then generates totally new media negotiation information Answer-MCU-P1-MG and returns the totally new media negotiation information Answer-MCU-P1-MG to the application server.
      7.4.10) The application server packages the Answer-MCU-P1-MG according to an ROAP or JSON format and then forwards the Answer-MCU-P1-MG to the Participant 1 WebRTC terminal.
      7.4.11) The Participant 1 WebRTC terminal sends an OK ACK message in an ROAP or JSON format to the application server.
      7.4.12) The application server converts the OK ACK message into an SIP ACK message to send to the multi-point control unit.
      7.4.13) The Participant 1 WebRTC terminal and the media gateway respectively and sequentially perform a connectivity check according to the candidate media connection addresses exchanged in the media negotiation process, and find that there are multiple candidate media connection addresses which can realize connection. Therefore, priorities of media connections are determined according to priorities of the candidate addresses (a priority of a host address is the highest, a priority of a host outward public network address is the secondly highest and a priority of a media relay address is the lowest), and it is decided to complete establishment of a media link between the two ends by using a host address or a host outward public network address.
      7.4.14) The Participant 1 WebRTC terminal and the multi-point control unit establish a media channel between the both parties by using a media link with the highest priority between the both parties, and the media gateway and the multi-point control unit establish a media channel between the both parties according to a media connection address in the negotiation process.
      For 7.4.15) to 7.4.19), a reference may be made to 1.4.11) to 1.4.15) in FIG. 18, and thus no repetitive description is made here.

   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.

For 7.5.1) to 7.5.4), a reference may be made to 1.5.1) to 1.5.4) in FIG. 18, and thus no repetitive description is made here.

### Application example 8

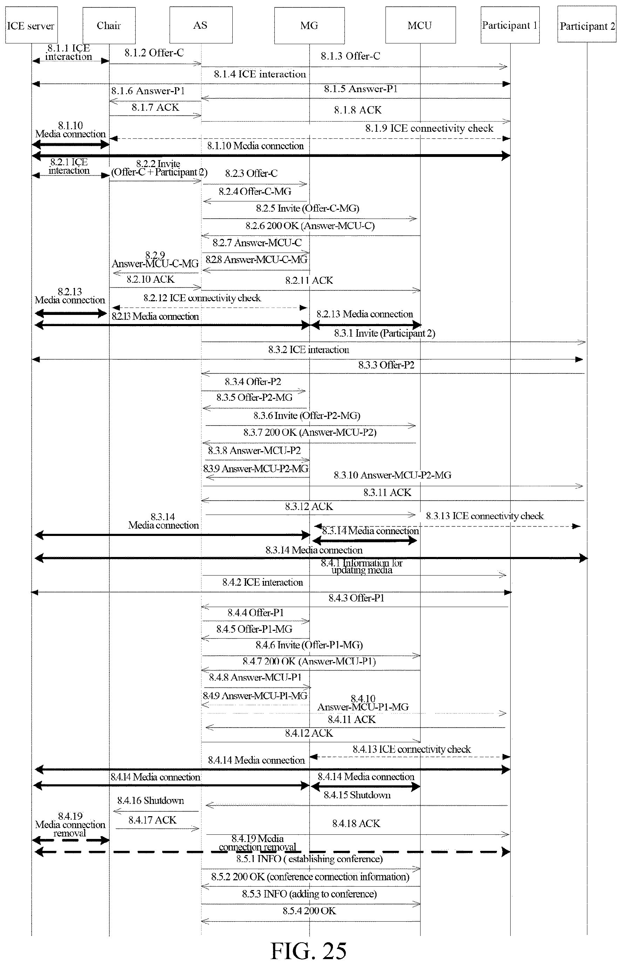

FIG. 25 illustrates a core flowchart of WebRTC adaptive media processing of later calling in a third party with a media relay under a situation that a multi-point control unit does not support a WebRTC protocol stack. Major steps thereof are as follows.
1) A chair initiates a real-time multimedia communication with a Participant 1.
   For 8.1.1) to 8.1.8), a reference may be made to 1.1.1) to 1.1.10) in FIG. 18, and thus no repetitive description is made here.
   8.1.9) The chair WebRTC terminal and the Participant 1 WebRTC terminal respectively and sequentially perform a connectivity check according to the candidate media connection addresses exchanged in the media negotiation process, and find that only the media relay address can complete establishment of a media link between the two ends.
   8.1.10) The chair WebRTC terminal and the Participant 1 WebRTC terminal establish a real-time multimedia communication by using an ICE relay server between the both parties.
2) The chair decides to add a Participant 2 to a discussion as needed. Therefore, the point-to-point real-time communication process becomes to a multi-party conference scenario. A core process thereof is as follows.
   8.2.1) The chair WebRTC terminal interacts with the ICE server to obtain media plane information Offer-C such as local audio and video coding and decoding, media encryption algorithms and keys and candidate media connection addresses.
   8.2.2) The chair WebRTC terminal packages the media plane information Offer-C and an identification of the invited Participant 2 jointly according to an ROAP or JSON format to generate an invite message, and then sends the invite message to the application server by using WebSocket or HTTP(s) long connection between the chair WebRTC terminal and the application server.

   The application server then completes work in the following aspects.
   a) Completing media negotiation between the chair WebRTC terminal and a multi-point control unit, and establishing a media channel between the both parties.
      For 8.2.3) to 8.2.11), a reference may be made to 7.2.3) to 7.2.11) in FIG. 24, and thus no repetitive description is made here.
      8.2.12) The chair WebRTC terminal and the multi-point control unit respectively and sequentially perform a connectivity check according to the candidate media connection addresses exchanged in the media negotiation process, and find that a media link can be established between the WebRTC terminal and the media gateway only through an ICE relay server.
      8.2.13) The chair WebRTC terminal and the multi-point control unit respectively establish communications by using a media link between each of the chair WebRTC terminal and the multi-point control unit and the media gateway.
   b) Completing media negotiation between the Participant 2 WebRTC terminal and the mufti-point control unit, and establishing a media channel between the both parties.
      For 8.3.1) to 8.3.12), a reference may be made to 7.3.1) to 7.3.12) in FIG. 24, and thus no repetitive description is made here.
      8.3.13) The Participant 2 WebRTC terminal and the multi-point control unit respectively and sequentially perform a connectivity check according to the candidate media connection addresses exchanged in the media negotiation process, and find that a media link can be established between the WebRTC terminal and the media gateway only through an ICE relay server.
      8.3.14) The Participant 2 WebRTC terminal and the multi-point control unit respectively establish communications by using a media link between each of the Participant 2 WebRTC terminal and the multi-point control unit and the media gateway.
   c) Completing media negotiation between the Participant 1 WebRTC terminal and the mufti-point control unit, establishing a media channel between the both parties, and shutting down a media link between the Participant 1 WebRTC terminal and the chair WebRTC terminal.
      For 8.4.1) to 8.4.12), a reference may be made to 7.4.1) to 7.4.12) in FIG. 24, and thus no repetitive description is made here.
      8.4.13) The Participant 1 WebRTC terminal and the multi-point control unit respectively and sequentially perform a connectivity check according to the candidate media connection addresses exchanged in the media negotiation process, and find that a media link can be established between the WebRTC terminal and the media gateway only through an ICE relay server.
      8.4.14) The Participant 1 WebRTC terminal and the multi-point control unit respectively establish communications by using a media link between each of the Participant 1 WebRTC terminal and the multi-point control unit and the media gateway.
      For 8.4.15) to 8.4.19), a reference may be made to 1.4.11) to 1.4.15) in FIG. 18, and thus no repetitive description is made here.

   Here, it should be specially pointed out that there is no clear sequence relation between a), b) and c), and a), b) and c) may be executed in any sequence in other embodiments.
3) The application server interacts with the media server and completes establishment of a multi-party conference on the media server, designation of a media synthesis and presentation policy of the multi-party conference, and media stream synthesis and distribution.

For 8.5.1) to 8.5.4), a reference may be made to 1.5.1) to 1.5.4) in FIG. 18, and thus no repetitive description is made here.

Although the embodiments disclosed by the present invention are described above, the described contents are just embodiments used for facilitating the understanding about the present invention instead of limiting the present invention. One skilled in the art may make any modification and variation to the implementation modes and the details without departing from the essence and scope disclosed by the present invention. However, the patent protection scope of the present invention shall be still subjected to the scope defined by the appended claims.

One skilled in the art can understand that all or partial steps in the above-mentioned methods may be completed by relevant hardware (such as a processor) instructed by a program, and the program may be stored in a computer readable storage medium such as a read-only memory, a magnetic disc or a compact disc. Optionally, all or partial steps in the above-mentioned embodiments may also be implemented by using one or more integrated circuits. Correspondingly, each module/unit in the above-mentioned embodiments may be implemented by means of hardware, e.g., a corresponding function thereof may be implemented through an integrated circuit. And it may also be implemented by means of a software function module, e.g., a corresponding function thereof may be implemented through a processor which executes a program/instruction stored in a memory. The present invention is not limited to combinations of hardware and software in any specific form.

### Industrial Applicability

The above-mentioned scheme can avoid the bad influences such as that the client terminal processing load is too heavy, the user network bandwidth consumption is too great and the quality of service is sharply decreased, and enable the user experience of services to be optimized and improved.

## Claims

1. A media processing method for Web Real-Time Communication, WebRTC, comprising:
after a first WebRTC terminal and a second WebRTC terminal establish a point-to-point real-time multimedia communication, receiving, by an application server, a message indicating that the first WebRTC terminal decides to add one or more third-party WebRTC terminals to the communication, respectively assisting in establishing media connections between the first WebRTC terminal, the second WebRTC terminal and the third-party WebRTC terminal and a media processing unit, and shutting down a point-to-point media connection between the first WebRTC terminal and the second WebRTC terminal; and
controlling, by the application server, the media processing unit to establish a multi-party conference among the first WebRTC terminal, the second WebRTC terminal and the third-party WebRTC terminal, to make each WebRTC terminal in the multi-party conference only send one media stream and receive one synthesized media stream.

2. The method according to claim 1, wherein,
the media processing unit comprises a media server; or
the media processing unit comprises a media gateway and a multi-point control unit.

3. The method according to claim 2, wherein,
the media processing unit comprises the media server; and
the step of respectively assisting, by the application server, in establishing media connections between the first WebRTC terminal, the second WebRTC terminal and the third-party WebRTC terminal and the media processing unit, comprises:
respectively assisting in completing media negotiation between the first WebRTC terminal, the second WebRTC terminal and the third-party WebRTC terminal and the media server, to make each WebRTC terminal and the media server establish a media channel between the WebRTC terminal and the media server by using a result of the media negotiation; or
respectively assisting in completing media negotiation between the first WebRTC terminal, the second WebRTC terminal and the third-party WebRTC terminal and the media server, to make each WebRTC terminal and the media server establish a media channel, via an Interactive Connectivity Establishment, ICE, relay server, between the WebRTC terminal and the media server by using a result of the media negotiation.

4. The method according to claim 2, wherein,
the media processing unit comprises the media gateway and the multi-point control unit; and
the step of respectively assisting, by the application server, in establishing media connections between the first WebRTC terminal, the second WebRTC terminal and the third-party WebRTC terminal and the media processing unit, comprises:
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel between the WebRTC terminal and the media gateway by using a result of the media negotiation, and the media gateway and the multi-point control unit establish a media channel between the media gateway and the multi-point control unit by using a result of the media negotiation; or
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel, via an ICE relay server, between the WebRTC terminal and the media gateway by using a result of the media negotiation, and the media gateway and the multi-point control unit establish a media channel between the media gateway and the multi-point control unit by using a result of the media negotiation.

5. The method according to claim 1, 3 or 4, wherein,
the step of respectively assisting, by the application server, in establishing media connections between the first WebRTC terminal, the second WebRTC terminal and the third-party WebRTC terminal and the media processing unit, comprises:
in a process that each WebRTC terminal and the media processing unit perform media negotiation, converting, by the application server, a message sent by each WebRTC terminal to the media processing unit into a message format which is capable of being recognized and processed by the media processing unit, and converting a message sent by the media processing unit to each WebRTC terminal into a message format which is capable of being recognized and processed by the WebRTC terminal.

6. The method according to claim 1, wherein,
the step of controlling, by the application server, the media processing unit to establish the multi-party conference among the first WebRTC terminal, the second WebRTC terminal and the third-party WebRTC terminal, to make any one WebRTC terminal in the multi-party conference only send one media stream and receive one synthesized media stream, comprises:
interacting, by the application server, with the media processing unit, establishing a multi-party conference on the media processing unit and controlling the media processing unit to perform multi-party media synthesis and presentation, to make each WebRTC terminal in one multi-party conference only send one media stream to the media processing unit and receive one synthesized media stream sent by the media processing unit.

7. The method according to claim 6, wherein,
the step of interacting, by the application server, with the media processing unit, establishing the multi-party conference on the media processing unit and controlling the media processing unit to perform multi-party media synthesis and presentation, comprises:
sending, by the application server, a conference establishment request to the media processing unit and sending media synthesis and presentation policy information to the media processing unit after information about conference connection returned by the media processing unit is received, to make the media processing unit complete media stream synthesis of the multi-party conference according to the media synthesis and presentation policy information and complete media stream distribution by using the media connection between the media processing unit and each WebRTC terminal in the multi-party conference.

8. A media processing method for Web Real-Time Communication, WebRTC, comprising:
respectively establishing, by a media processing unit, a media connection between the media processing unit and each WebRTC terminal in a plurality of WebRTC terminals based on assistance of an application server; and
interacting, by the media processing unit, with the application server, establishing a multi-party conference and performing multi-party media synthesis and presentation, to make each WebRTC terminal in one multi-party conference only send one media stream to the media processing unit and receive one synthesized media stream sent by the media processing unit.

9. The method according to claim 8, wherein,
the media processing unit comprises a media server; or
the media processing unit comprises a media gateway and a multi-point control unit.

10. The method according to claim 9, wherein,
the media processing unit comprises the media server; and
the step of respectively establishing, by the media processing unit, the media connection between the media processing unit and each WebRTC terminal in the plurality of WebRTC terminals based on assistance of the application server, comprises:
respectively completing media negotiation between the media processing unit and each WebRTC terminal in the plurality of WebRTC terminals based on assistance of the application server, and establishing a media channel between the media processing unit and each WebRTC terminal in the plurality of WebRTC terminals by using a result of the media negotiation; or
respectively completing media negotiation between the media processing unit and each WebRTC terminal in the plurality of WebRTC terminals based on assistance of the application server, and establishing a media channel, via an Interactive Connectivity Establishment, ICE, relay server, between the media processing unit and each WebRTC terminal in the plurality of WebRTC terminals by using a result of the media negotiation.

11. The method according to claim 9, wherein,
the media processing unit comprises the media gateway and the multi-point control unit; and
the step of respectively establishing, by the media processing unit, the media connection between the media processing unit and each WebRTC terminal in the plurality of WebRTC terminals based on assistance of the application server, comprises:
respectively completing media negotiation between each WebRTC terminal in the plurality of WebRTC terminals and the media gateway and media negotiation between the media gateway and the multi-point control unit based on assistance of the application server, and establishing a media channel between the media gateway and each WebRTC terminal in the plurality of WebRTC terminals and a media channel between the media gateway and the multi-point control unit by using results of the media negotiation; or
respectively completing media negotiation between each WebRTC terminal in the plurality of WebRTC terminals and the media gateway and media negotiation between the media gateway and the multi-point control unit based on assistance of the application server, and establishing a media channel, via an ICE relay server, between each WebRTC terminal in the plurality of WebRTC terminals and the media gateway and a media channel between the media gateway and the multi-point control unit by using results of the media negotiation.

12. The method according to claim 8, wherein,
the step of interacting, by the media processing unit, with the application server, establishing the multi-party conference and performing multi-party media synthesis and presentation, comprises:
receiving, by the media processing unit, a conference establishment request sent by the application server, returning information about conference connection to the media processing unit, receiving media synthesis and presentation policy information sent by the application server, completing media stream synthesis of the multi-party conference according to the media synthesis and presentation policy information and completing media stream distribution by using the media connection between the media processing unit and each WebRTC terminal in the multi-party conference.

13. A media processing method for Web Real-Time Communication, WebRTC, comprising:
establishing, by each WebRTC terminal participating in a multi-party conference, a media connection with a media processing unit based on assistance of an application server; and
after the media processing unit establishes the multi-party conference, sending, by each WebRTC terminal in the multi-party conference, one media stream to the media processing unit and receiving one synthesized media stream sent by the media processing unit.

14. The method according to claim 13, wherein the method further comprises:
firstly establishing, by the WebRTC terminal as a chair of the multi-party conference, a point-to-point real-time multimedia communication with one WebRTC terminal participating in the conference, and when two-party communication turns to multi-party communication, sending a message of deciding to add one or more third-party WebRTC terminals to the communication to the application server.

15. The method according to claim 13, wherein,
the media processing unit comprises a media server; and
the step of establishing, by each WebRTC terminal participating in the multi-party conference, the media connection with the media processing unit based on assistance of the application server, comprises:
completing, by each WebRTC terminal participating in the multi-party conference, media negotiation between the WebRTC terminal and the media server based on assistance of the application server, and establishing a media channel between the present WebRTC terminal and the media server by using a result of the media negotiation; or
completing, by each WebRTC terminal participating in the multi-party conference, media negotiation between the WebRTC terminal and the media server based on assistance of the application server, and establishing a media channel, via an Interactive Connectivity Establishment, ICE, relay server, between the present WebRTC terminal and the media server by using a result of the media negotiation.

16. The method according to claim 13, wherein,
the media processing unit comprises a media gateway and a multi-point control unit; and
the step of establishing, by each WebRTC terminal participating in the multi-party conference, the media connection with the media processing unit based on assistance of the application server, comprises:
completing, by each WebRTC terminal participating in the multi-party conference, media negotiation between the WebRTC terminal and the media gateway based on assistance of the application server, and establishing a media channel between the present WebRTC terminal and the media gateway by using a result of the media negotiation; or
completing, by each WebRTC terminal participating in the multi-party conference, media negotiation between the WebRTC terminal and the media gateway based on assistance of the application server, and establishing a media channel, via an ICE relay server, between the present WebRTC terminal and the media gateway by using a result of the media negotiation.

17. An application server for Web Real-Time Communication, WebRTC, comprising a first media connection establishment module and a conference establishment control module, wherein,
the first media connection establishment module is configured to, after a message indicating that a first WebRTC terminal decides to add other one or more third-party WebRTC terminals to a communication which has already established between the first WebRTC terminal and a second WebRTC terminal is received, respectively assist in establishing media connections between the first WebRTC terminal, the second WebRTC terminal and the third-party WebRTC terminal and a media processing unit, and shut down a point-to-point media connection between the first WebRTC terminal and the second WebRTC terminal; and
the conference establishment control module is configured to control the media processing unit to establish a multi-party conference among the first WebRTC terminal, the second WebRTC terminal and the third-party WebRTC terminal, to make each WebRTC terminal in the multi-party conference only send one media stream and receive one synthesized media stream.

18. The application server according to claim 17, wherein,
the media processing unit comprises a media server; and
the first media connection establishment module is configured to respectively assist in establishing media connections between the first WebRTC terminal, the second WebRTC terminal and the third-party WebRTC terminal and the media processing unit according to the following mode:
respectively assisting in completing media negotiation between the first WebRTC terminal, the second WebRTC terminal and the third-party WebRTC terminal and the media server, to make each WebRTC terminal and the media server establish a media channel between the WebRTC terminal and the media server by using a result of the media negotiation; or
respectively assisting in completing media negotiation between the first WebRTC terminal, the second WebRTC terminal and the third-party WebRTC terminal and the media server, to make each WebRTC terminal and the media server establish a media channel, via an Interactive Connectivity Establishment, ICE, relay server, between the WebRTC terminal and the media server by using a result of the media negotiation.

19. The application server according to claim 17, wherein,
the media processing unit comprises a media gateway and a multi-point control unit; and
the first media connection establishment module is configured to respectively assist in establishing media connections between the first WebRTC terminal, the second WebRTC terminal and the third-party WebRTC terminal and the media processing unit according to the following mode:
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel between the WebRTC terminal and the media gateway by using a result of the media negotiation, and the media gateway and the multi-point control unit establish a media channel between the media gateway and the multi-point control unit by using a result of the media negotiation; or
respectively assisting in completing media negotiation between the first WebRTC terminal, the second WebRTC terminal and the third-party WebRTC terminal and the media gateway and media negotiation between the media gateway and the multi-point control unit, to make each WebRTC terminal and the media gateway establish a media channel, via an ICE relay server, between the WebRTC terminal and the media gateway by using a result of the media negotiation, and the media gateway and the multi-point control unit establish a media channel between the media gateway and the multi-point control unit by using a result of the media negotiation.

20. The application server according to claim 17, 18 or 19, wherein,
the first media connection establishment module is configured to respectively assist in establishing media connections between the first WebRTC terminal, the second WebRTC terminal and the third-party WebRTC terminal and the media processing unit according to the following mode:
in a process that each WebRTC terminal and the media processing unit perform media negotiation, converting a message sent by each WebRTC terminal to the media processing unit into a message format which is capable of being recognized and processed by the media processing unit, and converting a message sent by the media processing unit to each WebRTC terminal into a message format which is capable of being recognized and processed by the WebRTC terminal.

21. The application server according to claim 17, wherein,
the conference establishment control module is configured to control the media processing unit to establish the multi-party conference among the first WebRTC terminal, the second WebRTC terminal and the third-party WebRTC terminal, to make any one WebRTC terminal in the multi-party conference only send one media stream and receive one synthesized media stream according to the following mode:
interacting with the media processing unit, establishing a multi-party conference on the media processing unit and controlling the media processing unit to perform multi-party media synthesis and presentation, to make each WebRTC terminal in one multi-party conference only send one media stream to the media processing unit and receive one synthesized media stream sent by the media processing unit.

22. The application server according to claim 21, wherein,
the conference establishment control module is configured to interact with the media processing unit, establish the multi-party conference on the media processing unit and control the media processing unit to perform multi-party media synthesis and presentation according to the following mode:
sending a conference establishment request to the media processing unit and sending media synthesis and presentation policy information to the media processing unit after information about conference connection returned by the media processing unit is received, to make the media processing unit complete media stream synthesis of the multi-party conference according to the media synthesis and presentation policy information and complete media stream distribution by using the media connection between the media processing unit and each WebRTC terminal in the multi-party conference.

23. A media processing unit for Web Real-Time Communication, WebRTC, comprising a second media connection establishment module and a conference establishment and media stream synthesis and presentation module, wherein,
the second media connection establishment module is configured to respectively establish a media connection between the media processing unit and each WebRTC terminal in a plurality of WebRTC terminals based on assistance of an application server; and
the conference establishment and media stream synthesis and presentation module is configured to interact with the application server, establish a multi-party conference and perform multi-party media synthesis and presentation, to make each WebRTC terminal in one multi-party conference only send one media stream to the media processing unit and receive one synthesized media stream sent by the media processing unit.

24. The media processing unit according to claim 23, wherein,
the media processing unit comprises a media server; or
the media processing unit comprises a media gateway and a multi-point control unit.

25. The media processing unit according to claim 24, wherein,
the media processing unit comprises the media server; and
the second media connection establishment module is configured to respectively establish the media connection between the media processing unit and each WebRTC terminal in the plurality of WebRTC terminals based on assistance of the application server according to the following mode:
respectively completing media negotiation between the media processing unit and each WebRTC terminal in the plurality of WebRTC terminals based on assistance of the application server, and establishing a media channel between the media processing unit and each WebRTC terminal in the plurality of WebRTC terminals by using a result of the media negotiation; or
respectively completing media negotiation between the media processing unit and each WebRTC terminal in the plurality of WebRTC terminals based on assistance of the application server, and establishing a media channel, via an Interactive Connectivity Establishment ICE relay server, between the media processing unit and each WebRTC terminal in the plurality of WebRTC terminals by using a result of the media negotiation.

26. The media processing unit according to claim 24, wherein,
the media processing unit comprises the media gateway and the multi-point control unit; and
the second media connection establishment module is configured to respectively establish the media connection between the media processing unit and each WebRTC terminal in the plurality of WebRTC terminals based on assistance of the application server according to the following mode:
respectively completing media negotiation between each WebRTC terminal in the plurality of WebRTC terminals and the media gateway and media negotiation between the media gateway and the multi-point control unit based on assistance of the application server, and establishing a media channel between the media gateway and each WebRTC terminal in the plurality of WebRTC terminals and a media channel between the media gateway and the multi-point control unit by using results of the media negotiation; or
respectively completing media negotiation between each WebRTC terminal in the plurality of WebRTC terminals and the media gateway and media negotiation between the media gateway and the multi-point control unit based on assistance of the application server, and establishing a media channel, via an ICE relay server, between each WebRTC terminal in the plurality of WebRTC terminals and the media gateway and a media channel between the media gateway and the multi-point control unit by using results of the media negotiation.

27. The media processing unit according to claim 23, wherein,
the conference establishment and media stream synthesis and presentation module is configured to interact with the application server, establish the multi-party conference and perform multi-party media synthesis and presentation according to the following mode:
receiving a conference establishment request sent by the application server, returning information about conference connection to the media processing unit, receiving media synthesis and presentation policy information sent by the application server, completing media stream synthesis of the multi-party conference according to the media synthesis and presentation policy information and completing media stream distribution by using the media connection between the media processing unit and each WebRTC terminal in the multi-party conference.

28. A Web Real-Time Communication, WebRTC, terminal, comprising a third media connection establishment module and a media sending and receiving module, wherein,
the third media connection establishment module is configured to establish a media connection with a media processing unit based on assistance of an application server; and
the media sending and receiving module is configured to, after the media processing unit establishes the multi-party conference, send one media stream to the media processing unit and receive one synthesized media stream sent by the media processing unit in the multi-party conference.

29. The terminal according to claim 28, wherein,
the terminal further comprises a chair module configured to, when the WebRTC terminal acts as a chair of the multi-party conference, firstly establish a point-to-point real-time multimedia communication with one WebRTC terminal participating in the conference, and when two party communication turns to multi-party communication, send a message of deciding to add one or more third-party WebRTC terminals to the communication to the application server.

30. The terminal according to claim 28, wherein,
the media processing unit comprises a media server; and
the third media connection establishment module is configured to establish the media connection with the media processing unit based on assistance of the application server according to the following mode:
completing media negotiation between the WebRTC terminal and the media server based on assistance of the application server, and establishing a media channel between the present WebRTC terminal and the media server by using a result of the media negotiation; or
completing media negotiation between the WebRTC terminal and the media server based on assistance of the application server, and establishing a media channel, via an Interactive Connectivity Establishment, ICE, relay server, between the present WebRTC terminal and the media server by using a result of the media negotiation.

31. The terminal according to claim 28, wherein,
the media processing unit comprises a media gateway and a multi-point control unit; and
the third media connection establishment module is configured to establish the media connection with the media processing unit based on assistance of the application server according to the following mode:
completing media negotiation between the WebRTC terminal and the media gateway based on assistance of the application server, and establishing a media channel between the present WebRTC terminal and the media gateway by using a result of the media negotiation; or
completing media negotiation between the WebRTC terminal and the media gateway based on assistance of the application server, and establishing a media channel, via an Interactive Connectivity Establishment ICE relay server, between the present WebRTC terminal and the media gateway by using a result of the media negotiation.

32. A computer storage medium, storing computer-executable instructions used for executing the method according to any one of claims 1-7.

33. A computer storage medium, storing computer-executable instructions used for executing the method according to any one of claims 8-12.

34. A computer storage medium, storing computer-executable instructions used for executing the method according to any one of claims 13-16.
